# EUROPEAN PATENT APPLICATION

(11) **EP 4 753 361 A1**
(43) Date of publication of application: **03.06.2026**
(21) Application number: 24850807.9
(22) Date of filing: 25.07.2024
(51) Int. Cl.: H04W 76/10, H04W 4/40

(54) **COMMUNICATION METHOD AND APPARATUS**

(30) Priority: 10.08.2023 CN 202311010859
(71) Applicant: HUAWEI TECHNOLOGIES CO., LTD., Shenzhen 518129 (CN)
(72) Inventor: LI, Xiangyu, Shenzhen, Guangdong 518129 (CN); PENG, Wenjie, Shenzhen, Guangdong 518129 (CN)
(74) Representative: Gill Jennings & Every LLP
(86) International application number: PCT/CN2024/107509
(87) International publication number: WO 2025/031158

(57) **Abstract**

This application provides a communication method and apparatus. The method includes: A first terminal device obtains a first configuration from a network device, where the first configuration includes a first radio link control bearer configuration, the first radio link control bearer configuration has an association relationship with a first carrier, the first radio link control bearer configuration is one of a plurality of radio link control bearer configurations corresponding to a packet data convergence protocol entity configuration, and the first carrier is a carrier corresponding to a terminal device that performs single-carrier communication; and multicasts or broadcasts, on the first carrier, data corresponding to a first radio link control bearer entity established by using the first radio link control bearer configuration. Based on the association relationship between the first radio link control bearer configuration and the first carrier, the first terminal device can multicast or broadcast, via the first radio link control bearer entity and the first carrier, data to a receiving terminal device that does not support sidelink carrier aggregation, thereby improving sidelink communication quality.

## Description

### CROSS-REFERENCE TO RELATED APPLICATIONS

This application claims priority to Chinese Patent Application No. 202311010859.6, filed with the China National Intellectual Property Administration on August 10, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a wireless communication system, data communication may be directly performed between terminal devices (or may be referred to as user equipment) by using a sidelink (sidelink, SL) technology. A typical application scenario of SL communication is a vehicle-to-everything (vehicle-to-everything, V2X) technology. In a V2X communication scenario, each vehicle is a terminal device, and data transmission may be directly performed between terminal devices by using the SL technology without a network. In this way, communication latency can be effectively reduced.

To further improve reliability of the SL communication, for example, a researcher in the industry starts to study, in a later release (for example, release Rel-18 or release Rel-18+) of a 5th generation (5th generation, 5G) (or referred to as new radio (new radio, NR)) communication protocol, an operation of a terminal device that supports SL carrier aggregation (carrier aggregation, CA). However, in release Rel-16 and release Rel-17 of the 5G communication protocol, a terminal device does not support the SL CA, and the terminal device that does not support the SL CA can perform SL communication only on one carrier. In this case, when a terminal device that supports the SL CA needs to perform SL communication with a terminal device that does not support the SL CA, if the terminal device that supports the SL CA chooses to perform SL transmission on a plurality of carriers, the terminal device that does not support the SL CA may fail to receive the SL transmission of the terminal device that supports the SL CA. Consequently, SL communication quality is reduced.

### SUMMARY

This application provides a communication method and apparatus, to improve sidelink communication quality.

According to a first aspect, this application provides a communication method. The method may be implemented by exchanging data between a plurality of communication apparatuses (for example, a first communication apparatus and a second communication apparatus). Optionally, the first communication apparatus may be a first terminal device or a component (for example, a chip, a chip system, or a circuit) that can support the first terminal device in implementing a needed function of the method, and the second communication apparatus may be a network device or a component (for example, a chip, a chip system, or a circuit) that can support the network device in implementing a needed function of the method. For example, the communication method is implemented by exchanging data between the first terminal device and the network device. In the method, the first terminal device obtains a first configuration from the network device, where the first configuration includes a first radio link control bearer configuration, the first radio link control bearer configuration has an association relationship with a first carrier, the first radio link control bearer configuration is one of a plurality of radio link control bearer configurations corresponding to a packet data convergence protocol entity configuration, the first radio link control bearer configuration is used to establish a first radio link control bearer entity, and the first carrier is a carrier corresponding to a terminal device that performs single-carrier communication. Then, the first terminal device may multicast or broadcast, on the first carrier, data corresponding to the first radio link control bearer entity. Optionally, sidelink carrier aggregation may include sidelink packet data convergence protocol duplication.

In the method, if one or more first radio link control bearer configurations have an association relationship with the first carrier, when the first terminal device needs to transmit data, the first terminal device can multicast or broadcast, via the first radio link control bearer entity and the first carrier, the data that needs to be transmitted to a receiving terminal device that does not support the sidelink carrier aggregation. This can effectively ensure normal data transmission between a terminal device that supports the sidelink carrier aggregation and a terminal device that does not support the sidelink carrier aggregation. In this way, sidelink communication reliability can be ensured, and sidelink communication quality can be effectively improved.

In a possible design, when the first terminal device does not support the sidelink carrier aggregation or a destination address corresponding to the receiving terminal device does not support the sidelink carrier aggregation, to ensure normal data transmission between a terminal device that supports the sidelink carrier aggregation and a terminal device that does not support the sidelink carrier aggregation to improve the sidelink communication quality, it may be specified that radio link control bearer entities respectively established by using the plurality of radio link control bearer configurations are used to transmit same data.

In a possible design, the method further includes:

When the packet data convergence protocol entity configuration obtained by the first terminal device includes a packet data convergence protocol split configuration, to ensure normal data transmission between a terminal device that does not support the sidelink carrier aggregation and a terminal device that supports the sidelink carrier aggregation, the first terminal device may transmit a plurality of pieces of data in the first terminal device via the first radio link control bearer entity, where the packet data convergence protocol split configuration indicates to transmit the plurality of pieces of data in the first terminal device via a plurality of radio link control bearer entities. Optionally, the sidelink carrier aggregation may include sidelink packet data convergence protocol split.

In the foregoing design, when the first terminal device does not support the sidelink carrier aggregation or the destination address corresponding to the receiving terminal device does not support the sidelink carrier aggregation, the first terminal device may choose not to apply (or not to use or ignore) the packet data convergence protocol split configuration, and may transmit the plurality of pieces of data in the first terminal device via the first radio link control bearer entity corresponding to the first carrier. This effectively ensures normal data transmission between a terminal device that supports the sidelink carrier aggregation and a terminal device that does not support the sidelink carrier aggregation. In this way, the reliability of the sidelink communication can be ensured, and the sidelink communication quality can be effectively improved.

In a possible design, when the first terminal device does not support the sidelink carrier aggregation and/or the destination address does not support the sidelink carrier aggregation, even if the first terminal device obtains the packet data convergence protocol split configuration, the first terminal device may choose not to apply the packet data convergence protocol split configuration. In this case, after establishing a sidelink radio bearer (including a packet data convergence protocol entity and one or more radio link control bearer entities) based on the obtained configuration, the first terminal device may select the first radio link control bearer entity corresponding to the first carrier from the one or more radio link control bearer entities to transmit the plurality of pieces of data in the first terminal device, where the destination address indicates the receiving terminal device with which the first terminal device performs sidelink communication.

In a possible design, the first terminal device may send first information to the network device, where the first information indicates that the first terminal device does not apply the packet data convergence protocol split configuration.

For example, after choosing not to apply the packet data convergence protocol split configuration, the first terminal device may send the first information to the network device. In this way, when subsequently configuring, for the first terminal device or the destination address requested by the first terminal device, a sidelink radio bearer configuration used to establish a sidelink radio bearer, the network device may not need to configure the packet data convergence protocol split configuration, so that configuration of the sidelink radio bearer configuration is more targeted and different requirements of the terminal device can be met.

In a possible design, the first terminal device may send second information to the network device, where the second information indicates that the first terminal device supports the sidelink carrier aggregation and/or indicates that the destination address supports the sidelink carrier aggregation, and the destination address indicates the receiving terminal device with which the first terminal device performs sidelink communication.

For example, when the first terminal device needs a sidelink radio bearer configuration needed for establishing a sidelink radio bearer, the first terminal device may actively send the second information to the network device. In this way, the network device can determine the corresponding sidelink radio bearer configuration for the first terminal device based on the first information in a targeted manner while ensuring the reliability of the sidelink communication.

In a possible design, when the first terminal device is in a radio resource control connected state, the first terminal device may include the second information in a terminal device capability information message or a sidelink terminal device information message, and send the second information to the network device, so that the network device can determine the corresponding first configuration for the first terminal device in a targeted manner, where the sidelink terminal device information message is used to request the first configuration. Optionally, after sending the terminal device capability information message to the network device, the first terminal device also sends the sidelink terminal device information message to the network device.

In a possible design, the first terminal device (for example, an access stratum of the first terminal device) may obtain third information from an upper layer of the first terminal device, where the third information indicates that the destination address supports the sidelink carrier aggregation.

For example, the access stratum of the first terminal device may learn, in a timely manner by using the upper layer of the first terminal device, whether the destination address corresponding to the receiving terminal device supports the sidelink carrier aggregation. In an example, when the destination address corresponding to the receiving terminal device supports the sidelink carrier aggregation, if the first terminal device also supports the sidelink carrier aggregation, the first terminal device and the receiving terminal device may perform sidelink communication on a plurality of carriers. If the first terminal device does not support the sidelink carrier aggregation, the first terminal device may still implement normal data transmission between the first terminal device and the receiving terminal device by applying the first configuration. In another example, when the destination address corresponding to the receiving terminal device does not support the sidelink carrier aggregation, if the first terminal device supports the sidelink carrier aggregation, the first terminal device may still implement normal data transmission between the first terminal device and the receiving terminal device by applying the first configuration. If the first terminal device does not support the sidelink carrier aggregation either, the first terminal device and the receiving terminal device may perform data transmission via the first carrier.

In a possible design, the association relationship between the first radio link control bearer configuration and the first carrier may be determined by the network device when the network device transmits the first configuration to the first terminal device, or may be determined by the first terminal device instead of the network device. For example, after obtaining the first configuration from the network device, the first terminal device may select, based on information about a carrier supported by the first terminal device, the first radio link control bearer configuration from the plurality of radio link control bearer configurations, to establish the association relationship with the first carrier.

According to a second aspect, this application provides a communication method. The method may be implemented by exchanging data between a plurality of communication apparatuses (for example, a first communication apparatus and a second communication apparatus). Optionally, the first communication apparatus may be a second terminal device or a component (for example, a chip, a chip system, or a circuit) that can support the second terminal device in implementing a needed function of the method, and the second communication apparatus may be a third terminal device or a component (for example, a chip, a chip system, or a circuit) that can support the third terminal device in implementing a needed function of the method. For example, the communication method is implemented by exchanging data between the second terminal device and the third terminal device. In the method, after determining that the second terminal device supports sidelink carrier aggregation, the second terminal device may send fourth information to the third terminal device on a second carrier, where the third terminal device may be a receiving terminal device with which the second terminal device performs sidelink communication, the fourth information may indicate that the second terminal device and the third terminal device perform sidelink transmission on a third carrier, the second carrier and/or the third carrier do/does not include a first carrier, the first carrier is a carrier corresponding to a terminal device that performs single-carrier communication, and the second carrier is different from the third carrier. Optionally, the sidelink carrier aggregation may include sidelink cross-carrier scheduling and/or sidelink cross-carrier feedback.

In the method, when a destination address corresponding to the receiving terminal device does not support the sidelink carrier aggregation, it is specified that the second carrier and/or the third carrier do/does not to include the first carrier. This can ensure that the receiving terminal device that does not support the sidelink carrier aggregation can normally receive, on the first carrier, sidelink data from the second terminal device, and can implement normal data transmission between a terminal device that supports the sidelink carrier aggregation and a terminal device that does not support the sidelink carrier aggregation. In this way, reliability of the sidelink communication can be ensured, and sidelink communication quality can be effectively improved.

In a possible design, the second terminal device may receive, on the second carrier or the third carrier, a hybrid automatic repeat request feedback from the third terminal device, where the hybrid automatic repeat request feedback indicates a sidelink transmission receiving status of the third terminal device on the third carrier.

For example, when the destination address corresponding to the third terminal device supports the sidelink carrier aggregation, the third terminal device may feed back, to the second terminal device on the second carrier or the third carrier, a status of receiving, by the third terminal device, data that is transmitted by the second terminal device on the third carrier. In this way, the second terminal device can learn of a data receiving status of the third terminal device in a timely manner, so that the second terminal device can correspondingly adjust data transmission in a timely manner.

In a possible design, the second terminal device (for example, an access stratum of the second terminal device) may obtain fifth information from an upper layer of the second terminal device, where the fifth information indicates that the destination address corresponding to the third terminal device supports the sidelink carrier aggregation.

For example, the access stratum of the second terminal device may learn, in a timely manner by using the upper layer of the second terminal device, whether the destination address corresponding to the third terminal device supports the sidelink carrier aggregation. In an example, when the destination address corresponding to the third terminal device supports the sidelink carrier aggregation, it may be specified that the second carrier and/or the third carrier include/includes the first carrier. In this way, regardless of a specific carrier on which the second terminal device transmits signaling, data, or the like, the third terminal device can normally receive the signaling, data, or the like. In another example, when the destination address corresponding to the third terminal device does not support the sidelink carrier aggregation, it may be specified that the second carrier and/or the third carrier do/does not include the first carrier. In this way, it can be ensured that the third terminal device can normally receive signaling, data, or the like that is transmitted by the second terminal device on the first carrier.

In a possible design, the sidelink aggregation may include the sidelink cross-carrier scheduling and/or the sidelink cross-carrier feedback. In this way, when a cross-carrier scheduling/cross-carrier feedback feature is considered, the communication method can be applied to a large quantity of scenarios, and can meet requirements of different application scenarios.

According to a third aspect, this application provides a possible communication apparatus. Optionally, the communication apparatus may be a communication device (for example, a first communication apparatus or a second communication apparatus) or a component (for example, a chip, a chip system, or a circuit) that can support the communication device in implementing a needed function of the communication method. For example, the first communication apparatus may be a first terminal device, a second terminal device, or the like, and the second communication apparatus may be a network device, a third terminal device, or the like. When the communication apparatus is a chip disposed in the first communication apparatus (or the second communication apparatus), the communication apparatus includes a transceiver and a processor, and does not include a memory. The transceiver exists as an input/output interface, and the input/output interface is used by the chip to implement receiving and sending of the communication apparatus. The input/output interface may include an input interface and/or an output interface. The input interface may implement receiving of the communication apparatus, and the output interface may be configured to implement sending of the communication apparatus. The processor is configured to read and execute a corresponding computer program or instructions, so that a corresponding function of the first communication apparatus (or the second communication apparatus) is implemented. Optionally, when the chip implements the corresponding function of the first communication apparatus (or the second communication apparatus) in a communication method embodiment provided in this application, the input/output interface may implement receiving and sending operations performed by the first communication apparatus (or the second communication apparatus) in the communication method embodiment provided in this application, and the processor may implement another operation other than the receiving and sending operations performed by the first communication apparatus (or the second communication apparatus) in the communication method embodiment provided in this application.

In an example, when the communication apparatus is configured to implement a function of the first terminal device in the communication method embodiment provided in this application, for beneficial effects, refer to descriptions of the first terminal device in the first aspect. Details are not described herein again. The communication apparatus has a function of implementing behavior of the first terminal device in a method instance in the first aspect. The function may be implemented by hardware, or may be implemented by hardware executing corresponding software. The hardware or the software includes one or more modules corresponding to the foregoing function. In a possible design, the communication apparatus includes a communication module (which may alternatively be referred to as a communication unit, a transceiver module, or a transceiver unit, configured to send and receive data) and a processing module (which may alternatively be referred to as a processing unit). The communication module is configured to obtain a first configuration from the network device. The first configuration includes a first radio link control bearer configuration, and the first radio link control bearer configuration has an association relationship with a first carrier. The first radio link control bearer configuration is one of a plurality of radio link control bearer configurations corresponding to a packet data convergence protocol entity configuration, the first radio link control bearer configuration is used to establish a first radio link control bearer entity, and the first carrier is a carrier corresponding to a terminal device that performs single-carrier communication. The processing module is configured to multicast or broadcast, on the first carrier, data corresponding to the first radio link control bearer entity. In another possible design, the communication apparatus includes a communication module (which may alternatively be referred to as a transceiver module, configured to send and receive data) and a processing module. The communication module is configured to obtain a packet data convergence protocol entity configuration from the network device. For example, the packet data convergence protocol entity configuration may include a PDCP split configuration, or may not include the PDCP split configuration. The PDCP split configuration indicates that a plurality of pieces of data in the first terminal device are transmitted via a plurality of radio link control bearer entities. The plurality of radio link control bearer entities are respectively established by the first terminal device based on a plurality of radio link control bearer configurations. Optionally, in the PDCP split configuration, the plurality of radio link control bearer configurations respectively have association relationships with different carriers. Optionally, the different carriers may include a first carrier. The processing module is configured to transmit the plurality of pieces of data in the first terminal device via a first radio link control bearer entity. These modules may perform a corresponding function of the first terminal device in the method instance in the first aspect. For details, refer to detailed descriptions of the corresponding function of the first terminal device in the method example. Details are not described herein again.

In another example, when the communication apparatus is configured to implement a function of the second terminal device in a communication method embodiment provided in this application, for beneficial effects, refer to descriptions of the second terminal device in the second aspect. Details are not described herein again. The communication apparatus has a function of implementing behavior of the first terminal device in a method instance in the first aspect. The function may be implemented by hardware, or may be implemented by hardware executing corresponding software. The hardware or the software includes one or more modules corresponding to the foregoing function. In a possible design, the communication apparatus includes a communication module (which may alternatively be referred to as a transceiver module, configured to send and receive data) and a processing module. The processing module is configured to determine that the second terminal device supports sidelink carrier aggregation. The communication module is configured to send fourth information to the third terminal device on a second carrier. The third terminal device is a receiving terminal device with which the second terminal device performs sidelink communication, and the fourth information may indicate that the second terminal device and the third terminal device perform sidelink transmission on a third carrier. The second carrier and/or the third carrier do/does not include a first carrier, the first carrier is generally a carrier corresponding to a terminal device that performs single-carrier communication, and the second carrier is different from the third carrier. These modules may perform a corresponding function of the second terminal device in the method instance in the second aspect. For details, refer to detailed descriptions of the corresponding function of the second terminal device in the method example. Details are not described herein again.

According to a fourth aspect, this application provides a possible communication apparatus. The communication apparatus may be a communication apparatus (for example, a first communication apparatus or a second communication apparatus) needed for performing the communication method provided in this application, may be a device including the communication apparatus needed for performing the communication method provided in this application, or may be a device having a function needed for implementing the communication method. The communication apparatus may include a transceiver and a processor. Optionally, the communication apparatus may further include a memory. The memory is configured to store a computer program or instructions. The processor is coupled to the memory and the transceiver. When the processor executes the computer program or the instructions, the communication apparatus is enabled to perform the method in any possible design of the first aspect or the method in any possible design of the second aspect.

According to a fifth aspect, this application provides a possible communication system. The communication system may include the first communication apparatus, the second communication apparatus, and the like mentioned in the first aspect or the second aspect. For implementation of a related function of the first communication apparatus or the second communication apparatus, refer to related descriptions mentioned in the first aspect or the second aspect. Details are not described herein again.

For example, the communication system may include one or more first communication apparatuses and one or more second communication apparatuses.

According to a sixth aspect, this application provides a computer program product. The computer program product includes a computer program or instructions, and when the computer program or the instructions are run on a computer, the computer is enabled to perform the method in any possible design of the first aspect or the method in any possible design of the second aspect.

According to a seventh aspect, this application provides a computer-readable storage medium. The computer-readable storage medium stores a computer program or instructions, and when the computer program or the instructions are executed by a computer, the computer is enabled to perform the method in any possible design of the first aspect or the method in any possible design of the second aspect.

According to an eighth aspect, this application provides a computer program. The computer program includes program code, and when a computer runs the computer program, the program code performs the method in any possible design of the first aspect or the method in any possible design of the second aspect.

According to a ninth aspect, this application further provides a chip. The chip may include a processor, and may further include a memory (or the chip is coupled to the memory), and the chip executes program instructions in the memory, to perform the method in any possible design of the first aspect or the method in any possible design of the second aspect. "Coupling" means that two components are directly or indirectly combined with each other. For example, coupling may mean an electrical connection between the two components.

According to a tenth aspect, this application further provides a chip system. The chip system includes a processor, configured to support a computer apparatus in implementing the method in any possible design of the first aspect or the method in any possible design of the second aspect. In a possible design, the chip system further includes a memory, and the memory is configured to store a program and data that are necessary for the computer apparatus. The chip system may include a chip, or may include a chip and another discrete component.

In this application, based on the implementations provided in the foregoing aspects, the implementations may be further combined to provide more implementations.

### BRIEF DESCRIPTION OF DRAWINGS

FIG. 1a is an example of a diagram of an architecture of a possible communication system according to an embodiment of this application;
FIG. 1b is an example of a diagram of an architecture of another possible communication system according to an embodiment of this application;
FIG. 2 is an example of a diagram of data transmission between protocol layers according to an embodiment of this application;
FIG. 3 is an example of a schematic flowchart of a communication method according to an embodiment of this application;
FIG. 4 is an example of a schematic flowchart of another communication method according to an embodiment of this application;
FIG. 5 is an example of a schematic flowchart of still another communication method according to an embodiment of this application;
FIG. 6 is an example of a diagram of a structure of a possible communication apparatus according to an embodiment of this application; and
FIG. 7 is an example of a diagram of a structure of another possible communication apparatus according to an embodiment of this application.

### DESCRIPTION OF EMBODIMENTS

Before technical solutions provided in this application are described, some terms in this application are first explained and described, to facilitate understanding by a person skilled in the art.
(1) Sidelink radio bearer (sidelink radio bearer, SLRB): The sidelink radio bearer is a bearer used to send and receive sidelink data at layer 2. The SLRB includes a packet data convergence protocol (packet data convergence protocol, PDCP) entity, a radio link control (radio link control, RLC) entity, a logical channel (logical channel, LCH), or the like. Optionally, one SLRB is uniquely associated with one group of address information, and the address information may include a source address identifier (for example, a source L2 ID) and a destination address identifier (for example, a destination L2 ID).
(2) Sidelink (sidelink, SL) carrier aggregation (carrier aggregation, CA): On a sidelink, SL communication may be performed between terminal devices by using one or more carriers (which may alternatively be referred to as SL carriers). For example, a terminal device may send a broadcast message or a multicast message via a plurality of SL carriers, or the terminal device may perform unicast communication with another terminal device via a plurality of SL carriers. Different data may be sent on different SL carriers, so that a data rate on the SL can be increased. For example, a split (split) mechanism may be used. The data rate is generally a data transmission rate, or may be referred to as a data rate or the like for short. Optionally, same data may also be sent on different carriers. For example, a duplication (duplication) mechanism may be used, and duplicated data may be transmitted on different carriers, to improve reliability of data transmission.
(3) Terminal device: The terminal device is a device that has a function of receiving and sending a signal on a user side, and may provide service functions such as a video, a voice, and data connectivity for a user.

Optionally, the terminal device may also be referred to as a terminal, user equipment (user equipment, UE), an access terminal device, a vehicle-mounted terminal, an industrial control terminal, a UE unit, a UE station, a mobile station (mobile station, MS), a mobile terminal (mobile terminal, MT), a remote station, a remote terminal device, a mobile device, a UE terminal device, a terminal device, a wireless communication device, a UE agent, a UE apparatus, or the like. In embodiments of this application, the terminal device may be at a fixed location, or may be mobile. This is not limited in embodiments of this application.

For example, the terminal device may be a mobile phone (mobile phone), a pad (Pad), a subscriber unit (subscriber unit), a cellular phone (cellular phone), a smartphone (smartphone), a wireless data card, a personal digital assistant (Personal Digital Assistant, PDA) computer, a wireless modem (modem), a handheld device (handset), a laptop computer (laptop computer), a computer with a wireless transceiver function, a virtual reality (virtual reality, VR) terminal device, an augmented reality (augmented reality, AR) terminal device, a wireless terminal in industrial control (industrial control), a terminal device that can perform sidelink communication (for example, a vehicle-mounted terminal device or a handheld terminal that performs V2X communication), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, a vehicle, an uncrewed aerial vehicle, a helicopter, an airplane, a factory machine/device, a machine type communication (Machine Type Communication, MTC) terminal, a ship, or a robot. A specific technology and a specific device form that are used by the terminal device are not limited in embodiments of this application.

(4) Network device: The network device may be any device that has a wireless transceiver function. For example, the network device may be a radio access network (radio access network, RAN) device that connects the terminal device to a wireless network. For example, the RAN device may include but is not limited to a next generation NodeB (next generation NodeB, gNB) in a 5th generation (5th generation, 5G) communication system, a next generation base station in a 6th generation (6th generation, 6G) communication system, a base station in a future communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), or the like.

Optionally, in a network structure, the RAN device may further include a central unit (central unit, CU) or a distributed unit (distributed unit, DU). In this structure, protocol layers of the network device may be split. Functions of some protocol layers are centrally controlled by the CU, functions of some or all of remaining protocol layers are distributed in the DU, and the CU centrally controls the DU. For example, functions of a PDCP layer and a protocol layer above the PDCP layer may be set in the CU, and functions of a protocol layer below the PDCP layer (for example, an RLC layer and a medium access control (medium access control, MAC) layer) are set in the DU. It should be noted that such protocol layer division is merely an example, and division may alternatively be performed at another protocol layer. A radio frequency apparatus may be remotely deployed and not placed in the DU, may be integrated into the DU, or may be partially remotely disposed and partially integrated into the DU. This is not limited in embodiments of this application. In addition, in some embodiments, a control plane (control plane, CP) and a user plane (user plane, UP) of the CU may be further separated into different entities for implementation, where the entities are respectively a control-plane CU entity (CU-CP entity) and a user-plane CU entity (CU-UP entity).

For example, the network device is a base station. The base station may communicate with the terminal device, or may communicate with the terminal device via a relay station. The terminal device may communicate with a plurality of base stations in different access technologies.

In embodiments of this application, the RAN device may be a macro base station, a micro base station or an indoor base station, a relay node or a donor node, or the like. A specific technology and a specific device form that are used by the radio access network device are not limited in embodiments of this application.

(5) Sidelink (sidelink, SL): The sidelink may also be referred to as a side link, a direct link, an edge link, a secondary link, or the like. In embodiments of this application, the foregoing terms each mean a link established between devices of a same type, and have a same meaning. The devices of the same type may be a link between terminal devices, or the like. The link between the terminal devices may be a D2D link defined in 3GPP release (Rel)-12/13/14/15, may be a vehicle-to-vehicle, vehicle-to-mobile, or vehicle-to-any entity V2X link defined by the 3GPP for an internet of vehicles, or may be a V2X link of another release (for example, Rel-16 or a later release) based on an NR system, or the like.

The following describes in detail embodiments of this application with reference to accompanying drawings.

The following describes an architecture of a possible communication system to which a communication method provided in this application is applicable. It should be noted that these descriptions are for ease of understanding by a person skilled in the art, and are not intended to limit the protection scope claimed by this application.

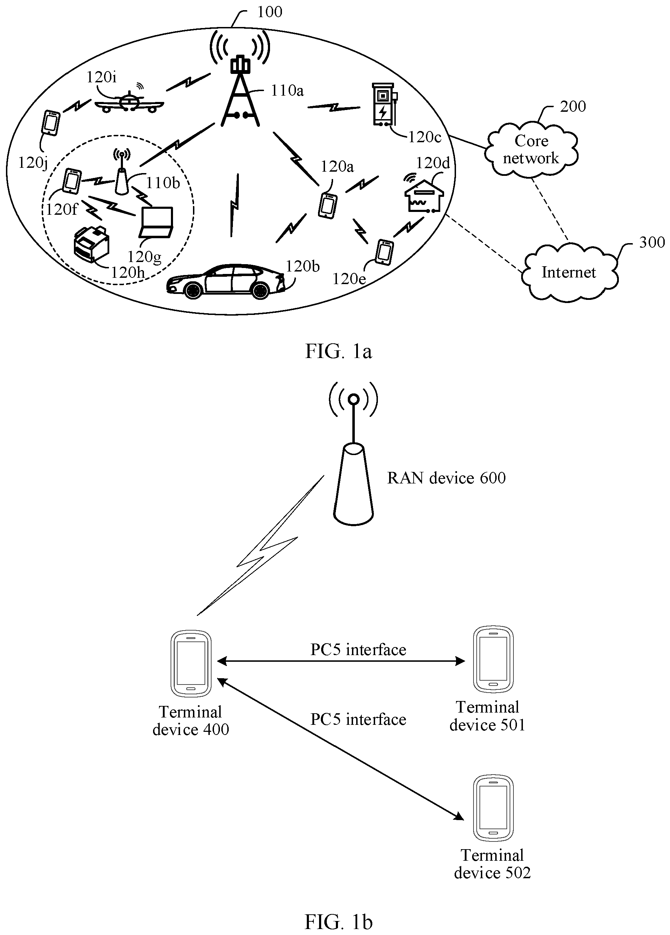

FIG. 1a is an example of a diagram of an architecture of a possible communication system to which an embodiment of this application is applicable. As shown in FIG. 1a, the architecture of the communication system includes a RAN 100 and a core network 200. Optionally, the architecture of the communication system may further include an internet 300. The RAN 100 may include at least one RAN device (for example, a RAN device 110a and a RAN device 110b in FIG. 1a) and at least one terminal device (for example, terminal devices 120a to 120j in FIG. 1a). Optionally, the terminal device may be connected to the RAN device in a wireless manner, and the RAN device may be connected to the core network 200 in a wireless or wired manner. A core network device and the RAN device may be different physical devices that are independent of each other. Alternatively, a function of a core network device and a logical function of the RAN device may be integrated into a same physical device. Alternatively, some functions of a core network device and some functions of the radio access network device may be integrated into one physical device. Terminal devices may be connected to each other and RAN devices may be connected to each other in a wired or wireless manner. For example, the architecture of the communication system may further include another network device (for example, a wireless relay device or a wireless backhaul device).

The RAN devices (for example, the RAN device 110a and the RAN device 110b) sometimes may also be referred to as access network devices, RAN entities, RAN nodes, access nodes, or the like, and form a part of the communication system, to help the terminal device implement radio access. A plurality of RAN devices in the communication system may be nodes of a same type, or may be nodes of different types. A network device in this embodiment of this application includes, for example, a RAN device. The RAN device may be a base station (base station), an evolved NodeB (evolved NodeB, eNodeB), a transmission reception point (transmission reception point, TRP), a transmission point (transmission point, TP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like.

In some scenarios, roles of the RAN devices (for example, the RAN device 110a and the RAN device 110b) and the terminal devices (for example, the terminal devices 120a to 120j) are relative. For example, the network element 120i in FIG. 1a may be a helicopter or an uncrewed aerial vehicle, and may be configured as a mobile base station. For the terminal 120j that accesses the RAN 100 via the network element 120i, the network element 120i is a base station. However, for the RAN device 110a, the network element 120i is a terminal. The RAN device and the terminal device are sometimes referred to as communication apparatuses. For example, in FIG. 1a, the network elements 110a and 110b may be understood as communication apparatuses having a function of the base station, and the network elements 120a to 120j may be understood as communication apparatuses having a function of the terminal.

In another possible scenario, a plurality of RAN devices coordinate to assist the terminal in implementing radio access, and different RAN devices separately implement some functions of the base station. For example, the RAN device may be a CU, a DU, a CU-CP, a CU-UP, or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

The CU and the DU may be separately disposed, or may be included in a same network element, for example, a baseband unit (baseband unit, BBU). The CU herein completes functions of a radio resource control protocol and a PDCP of the base station, and may further complete a function of a service data adaptation protocol (service data adaptation protocol, SDAP). The DU completes functions of an RLC layer and a MAC layer (which may alternatively be referred to as a medium access control layer) of the base station, and may further complete functions of some or all physical layers. For specific descriptions of the foregoing protocol layers, refer to related technical specifications of the 3rd generation partnership project (3rd generation partnership project, 3GPP). The RU may be included in a radio frequency device or a radio frequency unit, for example, included in a remote radio unit (remote radio unit, RRU), an active antenna unit (active antenna unit, AAU), or a remote radio head (remote radio head, RRH). In this embodiment of this application, when the network device includes the CU and/or the DU, in a possible implementation, a PDCP/SLRB-related configuration is generated by the CU, and an RLC bearer/RLC entity/LCH or the like is generated by the DC. For example, a PDCP entity configuration is used as an example. The PDCP entity configuration may be generated by the CU and sent by the CU to the DU (for example, sent by using a radio resource control (Radio Resource Control, RRC) message), and the PDCP entity configuration may be sent by the DU to a first terminal device. For another example, a radio link control RLC bearer configuration is used as an example. The RLC bearer configuration may be generated by the DU. The DU may first send the RLC bearer configuration to the CU, the CU processes the RLC bearer configuration and sends the processed RLC bearer configuration to the DU, and then the DU sends the processed RLC bearer configuration to a first terminal device.

In different systems, the CU (or the CU-CP and the CU-UP), the DU, or the RU may also have different names, but a person skilled in the art may understand meanings thereof. For example, in an open radio access network (open radio access network, ORAN) system, the CU may also be referred to as an open CU (open-CU, O-CU), the DU may also be referred to as an open DU (open-DU, O-DU), the CU-CP may also be referred to as an open CU-CP (open-CU-CP, O-CU-CP), the CU-UP may also be referred to as an O-CU-UP, and the RU may also be referred to as an open RU (open-RU, O-RU). For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

In this embodiment of this application, a function of the RAN device (for example, the base station) may alternatively be performed by a module (for example, a chip) in the base station, or may be performed by a control subsystem having the function of the base station. The control subsystem including the function of the base station herein may be a control center in the foregoing application scenarios, for example, a smart grid, industrial control, smart transportation, and a smart city. The function of the terminal device may alternatively be performed by a module (for example, a chip or a modem) in the terminal device, or may be performed by an apparatus having the function of the terminal.

Based on the architecture of the communication system shown in FIG. 1a, FIG. 1b is an example of a diagram of an architecture of a possible communication system to which an embodiment of this application is applicable. As shown in FIG. 1b, the architecture of the communication system includes a terminal device 400, at least one receiving terminal device (for example, a terminal device 501 and a terminal device 502) corresponding to the terminal device 400, and a RAN device 600. The terminal device 400 may perform SL communication with the at least one receiving terminal device by using one or more SL carriers. For example, the terminal device 501 is used as an example. The terminal device 400 may send SL information to the terminal device 501 by using one or more SL carriers. A communication interface between the terminal device 400 and the terminal device 501 is referred to as a proximity communication 5 (ProSe communication 5, PC5) interface, and a PC5 connection may be established between the terminal device 400 and the terminal device 501. For example, the terminal device 400 is UE 1, and the terminal device 501 is UE 2. The UE 1 may be in an in coverage (in coverage, IC) state or an out of coverage (out of coverage, OOC) state. When the UE 1 is in an RRC connected (connected) state, the UE 1 may request an SL resource from a network device (for example, the RAN device 600 shown in FIG. 1b) to send the SL information, for example, send SL signaling or SL data. This mode is referred to as a (base station scheduling mode, mode 1) resource allocation mode 1. In the mode 1, the RAN device 600 may schedule the SL resource for the UE 1 by using downlink control information (downlink control information, DCI), or may configure an SL configured grant (configured grant) for the UE 1 by using an RRC message. Optionally, the UE 1 may alternatively work in a mode 2 (autonomous contention mode, mode 2). When the UE 1 works in the mode 2, the UE 1 may be in an RRC connected state, an RRC inactive (inactive) state, an RRC idle (idle) state, an OOC state, or the like. In the mode 2, the UE 1 may receive an SL resource pool configuration from the RAN device 600, or may obtain the SL resource pool configuration from a preconfiguration. Then, the UE 1 may select an SL resource from an SL resource pool to send the SL information, for example, send SL signaling or SL data. For example, the UE 1 may select the SL resource from the SL resource pool in a random selection manner, or may select the SL resource from the SL resource pool based on a result of sensing (sensing) or partial sensing (partial sensing).

It should be noted that the communication method provided in embodiments of this application may be applied to various communication systems of radio access technologies (radio access technologies, RATs). For example, the communication system may be a long term evolution (long term evolution, LTE) system, may be a 5G (or referred to as new radio (new radio, NR)) communication system, or certainly may be a future communication system (for example, a 6G communication system) or another similar communication system. This is not limited in embodiments of this application. The architectures of the communication systems shown in embodiments of this application are intended to describe technical solutions in embodiments of this application more clearly, and do not constitute a limitation on the technical solutions provided in embodiments of this application. A person of ordinary skill in the art may learn that: With evolution of the architectures of the communication systems and emergence of new service scenarios, the technical solutions provided in embodiments of this application are also applicable to similar technical problems.

Optionally, the communication method provided in embodiments of this application may be applied to a device-to-device (device-to-device, D2D) scenario, for example, an NR-D2D scenario, or may be applied to a vehicle-to-everything (vehicle-to-everything, V2X) scenario, for example, an NR-V2X scenario (for example, a scenario in a field like intelligent driving, assisted driving, or an intelligent connected vehicle). For example, the V2X scenario may include but is not limited to vehicle-to-vehicle (vehicle-to-vehicle, V2V) communication, vehicle-to-pedestrian (vehicle-to-pedestrian, V2P) communication, a vehicle-to-network (vehicle-to-network, V2N) service, vehicle-to-infrastructure (vehicle-to-infrastructure, V2I) communication, or the like. For example, the device-to-device scenario may also include but is not limited to a communication scenario between a remote terminal device (remote UE) and a relay terminal device (relay user equipment, relay UE) in an architecture of a sidelink terminal device to network device relay (Sidelink user equipment-to-Network Relay) communication system, a communication scenario between a source terminal device (source UE) and a relay terminal device or a communication scenario between a relay terminal device and a target terminal device (target UE) in an architecture of a sidelink terminal device to terminal device relay (Sidelink user equipment-to-user equipment relay) communication system, and the like.

Optionally, in the architecture of the communication system shown in FIG. 1a or FIG. 1b, communication between the terminal device (for example, the terminal device 400) and the at least one receiving terminal device (or communication between the terminal device and the RAN device) may comply with a specific protocol layer structure. For example, a control plane protocol layer structure may include functions of protocol layers such as an RRC layer, a PDCP layer (which may alternatively be referred to as a packet data convergence protocol layer), an RLC layer, a MAC layer, and a physical layer (physical layer, PHY), and a user plane protocol layer structure may include functions of protocol layers such as the PDCP layer, the RLC layer, the MAC layer, and the PHY layer. In a possible implementation, an SDAP layer may be further included above the PDCP layer. For example, the RAN device may implement the functions of the protocol layers such as the RRC layer, the PDCP layer, the RLC layer, and the MAC layer via one node or a plurality of nodes.

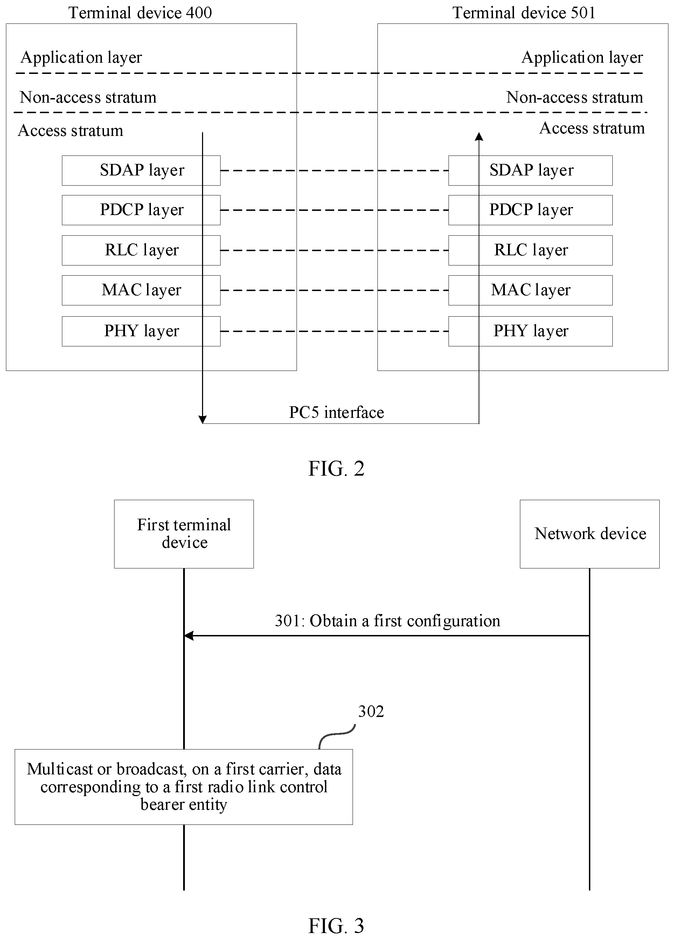

For example, data transmission between the terminal device 400 and the terminal device 501 shown in FIG. 1b is used as an example. The data transmission needs to pass through user plane protocol layers, for example, the SDAP layer, the PDCP layer, the RLC layer, the MAC layer, and the PHY layer. The SDAP layer, the PDCP layer, the RLC layer, the MAC layer, and the PHY layer may also be collectively referred to as an access stratum. A data transmission direction is divided into sending or receiving, and each layer is further divided into a sending part and a receiving part. An example in which the terminal device 400 transmits data to the terminal device 501 is used. FIG. 2 is a diagram of data transmission between protocol layers. In FIG. 2, a downward arrow indicates data sending, and an upward arrow indicates data receiving. Optionally, a communication mode between the terminal device 400 and the terminal device 501 may be multicast communication or broadcast communication. After obtaining data from an upper layer, a PDCP layer transmits the data to an RLC layer and a MAC layer, the MAC layer generates a transport block (transport block, TB), and then wireless transmission is performed by using a physical layer. The data is correspondingly encapsulated at each layer. Data received by a layer from an upper layer of the layer is considered as a service data unit (service data unit, SDU) of the layer. After being encapsulated at the layer, the data becomes a protocol data unit (protocol data unit, PDU), and is then transferred to a next layer. Optionally, it may be further learned from FIG. 2 that the terminal device may further have an application layer and a non-access stratum. The application layer may be configured to provide a service for an application program installed on the terminal device. Optionally, the non-access stratum may be configured to forward user data, for example, may forward data received from the application layer to an SDAP layer, or may forward data received from the SDAP layer to the application layer.

For example, the SDAP layer is included above the PDCP layer. When the terminal device 400 sends, to the terminal device 501, a data packet corresponding to the multicast communication (or the broadcast communication), an SDAP entity of the terminal device 400 may deliver, based on the correspondence, an SDAP PDU including the data packet to a PDCP entity corresponding to an SLRB corresponding to the multicast communication for processing. After receiving the SDAP PDU, the PDCP entity corresponding to the SLRB processes an SDAP SDU included in the SDAP PDU to generate a PDCP PDU, and may deliver the PDCP PDU to an RLC entity in the SLRB. After receiving the PDCP PDU, the RLC entity processes a PDCP SDU included in the PDCP PDU to generate an RLC PDU, and may deliver the RLC PDU to a MAC entity of the terminal device 400 through an LCH corresponding to the SLRB. After receiving the RLC PDU, the MAC entity processes an RLC SDU included in the RLC PDU to obtain a MAC PDU, and may send the MAC PDU to a MAC entity of the terminal device 501 through the PC5 interface. After receiving the MAC PDU, the MAC entity of the terminal device 501 delivers the MAC PDU to an SLRB corresponding to the multicast communication in the terminal device 501 for processing. Each SLRB corresponds to one PDCP entity, one or more RLC entities, one or more LCHs, and the like. A configuration of each SLRB may include an SLRB identifier, a PDCP entity configuration, an RLC entity configuration, an LCH configuration, and the like.

The following describes in detail a specific implementation of the communication method in embodiments of this application based on the architectures of the communication systems shown in FIG. 1a and FIG. 1b.

FIG. 3 is an example of a schematic flowchart of a communication method according to an embodiment of this application. The method is applicable to the architectures of the communication systems shown in FIG. 1a and FIG. 1b. A procedure of the method may be implemented by exchanging data between a plurality of communication apparatuses (for example, a first communication apparatus and a second communication apparatus). Optionally, the first communication apparatus may be a first terminal device or a component (for example, a chip, a chip system, or a circuit) that can support the first terminal device in implementing a needed function of the method, and the second communication apparatus may be a network device or a component (for example, a chip, a chip system, or a circuit) that can support the network device in implementing a needed function of the method. For example, the first terminal device may be the terminal device 120f, the terminal device 120g, or the like shown in FIG. 1a, and the network device may be the RAN device 110b shown in FIG. 1a. Alternatively, the first terminal device may be the terminal device 120a, the terminal device 120i, or the like shown in FIG. 1a, and the network device may be the RAN device 110a shown in FIG. 1a. Alternatively, the first terminal device may be the terminal device 400 shown in FIG. 1b, and the network device may be the RAN device 600 shown in FIG. 1b. Optionally, the network device may alternatively be a core network, for example, the core network 200 shown in FIG. 1a. To facilitate description of technical solutions provided in this embodiment of this application, the following describes, by using an example in which the first communication apparatus is the first terminal device and the second communication apparatus is the network device, a procedure of implementing the communication method by exchanging data between the first communication apparatus and the second communication apparatus. As shown in FIG. 3, the method includes the following steps.

Step 301: The first terminal device obtains a first configuration from the network device.

The first configuration may include (which may alternatively be understood as being associated with or corresponding to) a first radio link control bearer configuration, where the first radio link control bearer configuration has an association relationship (which may alternatively be referred to as a mapping relationship or a correspondence) with a first carrier, and the first radio link control bearer configuration is one of a plurality of radio link control bearer configurations corresponding to a packet data convergence protocol entity configuration. The first carrier is a carrier corresponding to a terminal device that performs single-carrier communication. For example, the terminal device that performs single-carrier communication may be a terminal device that supports only the single-carrier communication (which may be understood as a terminal device that does not support SL CA), or may be a terminal device that supports the single-carrier communication (which may be understood as that a terminal device that supports SL CA also supports SL communication on one carrier). For example, the first carrier may be one of the following content: a carrier predefined in a communication protocol, a default carrier, a carrier supported by a terminal device in release Rel-16 and release Rel-17, a specific carrier in a sidelink carrier list included in a system information block (system information block, SIB) 12 message, or the like. For example, the specific carrier in the sidelink carrier list included in the SIB 12 message may be the 1^{st} carrier in the sidelink carrier list included in the SIB 12 message. Optionally, the SIB 12 message may alternatively be replaced with another SIB message. Optionally, the first configuration may include the plurality of radio link control bearer configurations. In an example, the packet data convergence protocol entity configuration may be included in the first configuration. In another example, the packet data convergence protocol entity configuration may alternatively not be included in the first configuration. For example, the first configuration is an SLRB configuration. Optionally, that the first radio link control bearer configuration has the association relationship with the first carrier may be understood as that the first radio link control bearer configuration has the association relationship with only the first carrier, in other words, the first radio link control bearer configuration has no association relationship with another carrier other than the first carrier.

In a possible implementation, the network device may specify that the first radio link control bearer configuration has the association relationship with the first carrier, and include the association relationship in the first configuration or the first radio link control bearer configuration for transmission to the first terminal device. Alternatively, the network device may transmit the association relationship to the first terminal device in another manner, for example, may separately transmit the association relationship to the first terminal device, or may include the association relationship in another message for transmission to the first terminal device. This is not limited in this embodiment of this application. In another possible implementation, the network device transmits only the packet data convergence protocol entity configuration, the plurality of radio link control bearer configurations, and the like to the first terminal device, and does not specify specific carriers with which the plurality of radio link control bearer configurations respectively have association relationships. It is clear that the network device does not specify that the first radio link control bearer configuration has the association relationship with the first carrier. When receiving the packet data convergence protocol entity configuration, the plurality of radio link control bearer configurations, and the like, the first terminal device may select one radio link control bearer configuration (for example, the first radio link control bearer configuration) from the plurality of radio link control bearer configurations to establish an association relationship with the first carrier.

Optionally, one radio link control bearer configuration may include one radio link control entity configuration and one logical channel configuration, and the one logical channel configuration may have an association relationship with one or more carriers. A radio link control entity established by using the one radio link control entity configuration may have a correspondence with a logical channel established by using the one logical channel configuration. For example, a radio link control bearer configuration (for example, a radio link control bearer configuration 1) is used as an example. A logical channel configuration included in the radio link control bearer configuration 1 has an association relationship with a carrier A. When the first terminal device transmits data on a logical channel established by using the logical channel configuration, the carrier A may be used. In other words, that a radio link control bearer configuration has an association relationship with a carrier may mean that a logical channel configuration included in the radio link control bearer configuration has an association relationship with the carrier.

For example, the following describes, by using the following several possible implementations, an implementation process in which the first terminal device obtains the first configuration from the network device.

Manner 1: The first terminal device sends second information to the network device. The network device receives the second information. In an example, the second information may indicate that the first terminal device supports the sidelink SL carrier aggregation CA and/or may indicate that a destination address supports the SL CA. The destination address may indicate a receiving terminal device with which the first terminal device performs sidelink communication. In another example, the second information may alternatively indicate that the first terminal device does not support the SL CA and/or may indicate that a destination address does not support the SL CA. Optionally, the SL CA may include sidelink SL packet data convergence protocol entity PDCP duplication (duplication).

For example, the second information may be carried in a terminal device capability information message or a sidelink terminal device information message. When the first terminal device is in a radio resource control connected state, the first terminal device may send the terminal device capability information (UE capability information) message or the sidelink terminal device information (Side link UE information, SUI) message to the network device. The sidelink terminal device information message may be used to request the first configuration, or may be used to request a sidelink radio bearer configuration, and the sidelink radio bearer configuration includes the first configuration. Optionally, when the second information is carried in the terminal device capability information message, after sending the terminal device capability information message to the network device, the first terminal device further sends the sidelink terminal device information message to the network device.

In a possible manner, the process of obtaining the first configuration by the first terminal device further includes: The first terminal device obtains third information. Optionally, before the first terminal device sends the second information to the network device, an access stratum of the first terminal device may obtain the third information from an upper layer of the first terminal device. In a possible implementation, the third information may indicate that the destination address supports the SL CA, or may indicate that the destination address does not support the SL CA. In another possible implementation, the third information may alternatively indicate that the first terminal device supports the SL CA, or may indicate that the first terminal device does not support the SL CA. It should be understood that the first terminal device may alternatively not need to learn, from an upper layer, whether the first terminal device has an SL CA capability, and whether the first terminal device has the capability of supporting the SL CA is configured in the first terminal device. Optionally, the first terminal device may alternatively obtain, from a network device of a cell on which the first terminal device camps, related information about whether the first terminal device supports the SL CA, or may obtain, from the receiving terminal device, related information about whether the first terminal device supports the SL CA. In still another possible implementation, the third information may alternatively indicate that the destination address supports a Rel-18 service or a Rel-18+ service, or may indicate that the destination address does not support a Rel-18 service or a Rel-18+ service. When the destination address supports the Rel-18 service or the Rel-18+ service, the destination address supports the SL CA.

Optionally, the third information may alternatively include an association relationship between a service type and the destination address and/or information about a carrier supported by the service type (for example, a name, an index, or an identifier of the carrier). For example, the service type may include but is not limited to a provider service identifier (provider service identifier, PSID), an intelligent transport systems application identifier (intelligent transport systems application identifier, ITS-AID), an application identifier (Application Identifier, AID), or the like.

For example, the upper layer herein may be a layer above an access stratum of a terminal device (for example, the first terminal device), for example, a V2X layer, an application layer, or a layer between the V2X layer and the application layer. For example, the access stratum of the terminal device (for example, the first terminal device) may include one or more of an RRC layer, an SDAP layer, a PDCP layer, an RLC layer, and a MAC layer. Optionally, the access stratum of the terminal device may further include a PHY layer. Optionally, the V2X layer may alternatively be replaced with a ProSe layer or a PC5-S layer.

After receiving the sidelink terminal device information message from the first terminal device, the network device may determine the first configuration based on the second information. Then, the network device may transmit the first configuration to the first terminal device. The following describes, by using the following several possible examples, an implementation process in which the network device determines the first configuration in Manner 1.

Example 1: When the second information indicates that the first terminal device supports the SL CA, to ensure normal data transmission between the first terminal device and a receiving terminal device that does not support the SL CA, the network device may select one radio link control bearer configuration (for example, the first radio link control bearer configuration) from the plurality of radio link control bearer configurations corresponding to the packet data convergence protocol entity configuration to establish an association relationship (which may alternatively be referred to as a correspondence or a mapping relationship) with the first carrier. Then, the network device may generate the first configuration based on the first radio link control bearer configuration and the association relationship between the first radio link control bearer configuration and the first carrier.

For example, the SL PDCP duplication may be cross-carrier SL PDCP duplication (where the duplication is performed on different carriers), or may be same-carrier SL PDCP duplication (where the duplication is performed on a same carrier). In this way, in the method, after applying (which may alternatively be referred to as using) the first configuration, the first terminal device may multicast or broadcast, on the first carrier, data corresponding to a first radio link control bearer entity. The first radio link control bearer entity is established by the first terminal device based on the first radio link control bearer configuration.

Example 2: When the second information indicates that the first terminal device supports the SL CA, to ensure normal data transmission between the first terminal device and a receiving terminal device that does not support the SL CA, the network device may alternatively establish an association relationship between each of the plurality of radio link control bearer configurations corresponding to the packet data convergence protocol entity configuration and the first carrier. Then, the network device may generate the first configuration based on the plurality of radio link control bearer configurations and the association relationships respectively between the plurality of radio link control bearer configurations and the first carrier.

Example 3: When the second information indicates that the destination address supports the SL CA and the first terminal device supports the SL CA, to ensure that data multicast or broadcast by the first terminal device can be received by another receiving terminal device that does not support the SL CA to implement normal data transmission between a terminal device that does not support the SL CA and a terminal device that supports the SL CA, the network device may select one radio link control bearer configuration (for example, the first radio link control bearer configuration) from the plurality of radio link control bearer configurations corresponding to the packet data convergence protocol entity configuration to establish an association relationship with the first carrier. Then, the network device may generate the first configuration based on the first radio link control bearer configuration and the association relationship between the first radio link control bearer configuration and the first carrier.

Example 4: When the second information indicates that the destination address supports the SL CA and the first terminal device supports the SL CA, to ensure that data multicast or broadcast by the first terminal device can be received by another receiving terminal device that does not support the SL CA to implement normal data transmission between a terminal device that does not support the SL CA and a terminal device that supports the SL CA, the network device may alternatively establish an association relationship between each of the plurality of radio link control bearer configurations corresponding to the packet data convergence protocol entity configuration and the first carrier. Then, the network device may generate the first configuration based on the plurality of radio link control bearer configurations and the association relationships respectively between the plurality of radio link control bearer configurations and the first carrier.

Optionally, the network device may alternatively select a plurality of radio link control bearer configurations (for example, a plurality of first radio link control bearer configurations) from the plurality of radio link control bearer configurations to establish association relationships with the first carrier, and may generate the first configuration based on the plurality of first radio link control bearer configurations and the association relationships respectively between the plurality of first radio link control bearer configurations and the first carrier.

Optionally, the first configuration in Example 1, Example 2, Example 3, or Example 4 may be generated by a DU. In this case, the first configuration does not include the packet data convergence protocol entity configuration. After generating the first configuration, the DU may send the first configuration to a CU. After receiving the first configuration, the CU may perform corresponding processing on the first configuration. For example, the CU encapsulates the first configuration and another configuration (for example, the packet data convergence protocol entity configuration) into one message, or may encapsulate the first configuration into the sidelink radio bearer configuration. This is not limited in this embodiment of this application. Then, the CU may send the processed first configuration to the DU, and the DU sends the processed first configuration to the first terminal device. In a possible implementation, the DU and the CU may be different network devices. For example, when the DU and the CU are different network devices, the DU and the CU may be two different network devices that belong to a same communication architecture (for example, a 3GPP architecture or an ORAN architecture), or may be two network devices that belong to different communication architectures (for example, one is a network device in a 3GPP architecture, and the other is a network device in an ORAN architecture). In another possible implementation, the DU and the CU may alternatively be separately disposed, respectively used as independent units, and located in different network devices. For example, a network device in which the DU is located as an independent unit and a network device in which the CU is located as an independent unit may be two different network devices that belong to a same communication architecture (for example, a 3GPP architecture or an ORAN architecture), or may be two network devices that belong to different communication architectures (for example, one is a network device in a 3GPP architecture, and the other is a network device in an ORAN architecture). In still another possible implementation, the DU and the CU may alternatively be combined together as one network device. The network device may be a network device in a 3GPP architecture, or may be a network device in an ORAN architecture. In still another possible implementation, the DU and the CU may alternatively be integrated into a same network element as two independent units. The network element is located in a network device. The network device may be a network device in a 3GPP architecture, or may be a network device in an ORAN architecture.

Manner 2: When camping on or connecting to one of a plurality of cells included in a coverage area of the network device, the first terminal device may obtain the first configuration multicast or broadcast by the network device.

The network device generates the first configuration in advance or proactively, and may externally multicast or broadcast the first configuration in a communication mode like multicast communication or broadcast communication.

Optionally, the network device may alternatively send the first configuration to the first terminal device in a unicast mode.

In a possible implementation, the network device may select one radio link control bearer configuration (for example, the first radio link control bearer configuration) from the plurality of radio link control bearer configurations corresponding to the packet data convergence protocol entity configuration to establish an association relationship with the first carrier. Then, the network device may generate the first configuration based on the first radio link control bearer configuration and the association relationship between the first radio link control bearer configuration and the first carrier.

In another possible implementation, the network device may establish an association relationship between each of the plurality of radio link control bearer configurations corresponding to the packet data convergence protocol entity configuration and the first carrier. Then, the network device may generate the first configuration based on the plurality of radio link control bearer configurations and the association relationships respectively between the plurality of radio link control bearer configurations and the first carrier. In this way, in the method, after applying (which may alternatively be referred to as using) the first configuration, the first terminal device may separately multicast or broadcast, on the first carrier, data corresponding to a plurality of radio link control bearer entities. In this way, a receiving terminal device that does not support the SL CA can receive the data from the first terminal device. This implements normal data transmission between a terminal device that supports the SL CA and a terminal device that does not support the SL CA, and ensures sidelink communication reliability. The plurality of radio link control bearer entities are respectively established by the first terminal device based on the plurality of radio link control bearer configurations, and the plurality of radio link control bearer entities are used to transmit same data. One radio link control bearer entity includes one radio link control entity and one logical channel.

For example, the following describes, by using the following several possible examples, an implementation process in which the network device transmits the first configuration to the first terminal device in Manner 2.

Example 1: After determining the first configuration, the network device may encapsulate the first configuration into a sidelink radio bearer configuration. Then, the network device may transmit the sidelink radio bearer configuration to the first terminal device in a communication mode like unicast communication, broadcast communication, or multicast communication.

In an example, when the first configuration includes the packet data convergence protocol entity configuration, the sidelink radio bearer configuration may include (or be associated with or correspond to) another radio link control bearer configuration other than the first radio link control bearer configuration.

In another example, when the first configuration does not include the packet data convergence protocol entity configuration, the sidelink radio bearer configuration may include (or be associated with or correspond to) the packet data convergence protocol entity configuration and another radio link control bearer configuration other than the first radio link control bearer configuration.

Optionally, the sidelink radio bearer configuration may further include (or be associated with or correspond to) carrier information (for example, a carrier name, a carrier index, or a carrier identifier) corresponding to the plurality of radio link control bearer configurations, and the like. For example, address information may include but is not limited to a source address identifier (for example, a source L2 ID), a source address name, a destination address identifier (for example, a destination L2 ID or a destination ID), a destination address name, or the like. Optionally, the address information may further include a communication type. The communication type may include unicast, multicast, or broadcast. Optionally, for the unicast, the destination address identifier is an identifier of the receiving terminal device. For the multicast, the destination address identifier is a group identifier (group destination L2 ID). For the broadcast, the destination address identifier is a destination address identifier corresponding to a service type.

Optionally, the packet data convergence protocol entity configuration may be generated by a CU. After generating the packet data convergence protocol entity configuration, the CU may send the packet data convergence protocol entity configuration to a DU. For example, the CU may encapsulate the packet data convergence protocol entity configuration into an RRC message and send the RRC message to the DU. After receiving the RRC message, the DU may send the RRC message to the first terminal device, or may encapsulate, into another message, the packet data convergence protocol entity configuration parsed out in the RRC message, and send the another message to the first terminal device. In a possible implementation, the DU and the CU may be different network devices. For example, when the DU and the CU are different network devices, the DU and the CU may be two different network devices that belong to a same communication architecture (for example, a 3GPP architecture or an ORAN architecture), or may be two network devices that belong to different communication architectures (for example, one is a network device in a 3GPP architecture, and the other is a network device in an ORAN architecture). In another possible implementation, the DU and the CU may alternatively be separately disposed, respectively used as independent units, and located in different network devices. For example, a network device in which the DU is located as an independent unit and a network device in which the CU is located as an independent unit may be two different network devices that belong to a same communication architecture (for example, a 3GPP architecture or an ORAN architecture), or may be two network devices that belong to different communication architectures (for example, one is a network device in a 3GPP architecture, and the other is a network device in an ORAN architecture). In still another possible implementation, the DU and the CU may alternatively be combined together as one network device. The network device may be a network device in a 3GPP architecture, or may be a network device in an ORAN architecture. In still another possible implementation, the DU and the CU may alternatively be integrated into a same network element as two independent units. The network element is located in a network device. The network device may be a network device in a 3GPP architecture, or may be a network device in an ORAN architecture.

Optionally, the radio link control bearer configuration may be generated by the DU. For an implementation process in which the DU generates and sends the radio link control bearer configuration, refer to the implementation process in which the DU generates and sends the first configuration in Manner 1. Details are not described herein again.

Example 2: After determining the first configuration, the network device may transmit the first configuration to the first terminal device in a communication mode like unicast communication, broadcast communication, or multicast communication.

In an example, when the first configuration includes the packet data convergence protocol entity configuration, the network device may further transmit another radio link control bearer configuration that is associated with or corresponding to the first configuration and that is other than the first radio link control bearer configuration to the first terminal device in a communication mode like unicast communication, broadcast communication, or multicast communication.

In another example, when the first configuration does not include the packet data convergence protocol entity configuration, the network device may further transmit the packet data convergence protocol entity configuration associated with or corresponding to the first configuration and another radio link control bearer configuration that is associated with or corresponding to the first configuration and that is other than the first radio link control bearer configuration to the first terminal device in a communication mode like unicast communication, broadcast communication, or multicast communication.

Optionally, the first configuration may further include at least one of the following: the address information, carrier information corresponding to the another radio link control bearer configuration, or the like, or may not include the address information, the carrier information corresponding to the another radio link control bearer configuration, or the like. When the first configuration does not include the address information, the carrier information corresponding to the another radio link control bearer configuration, or the like, the network device may further transmit at least one of the following associated with or corresponding to the first configuration: the address information, the carrier information corresponding to the another radio link control bearer configuration, or the like to the first terminal device in a communication mode like unicast communication, broadcast communication, or multicast communication.

Example 3: After determining the sidelink radio bearer configuration, the network device may transmit the sidelink radio bearer configuration as the first configuration to the first terminal device in a communication mode like unicast communication, broadcast communication, or multicast communication.

For example, the sidelink radio bearer configuration may include but is not limited to the packet data convergence protocol entity configuration, the plurality of radio link control bearer configurations, the association relationship between the first radio link control bearer configuration included in the plurality of radio link control bearer configurations and the first carrier, or the like. In an example, the sidelink radio bearer configuration may further include at least one of the following: the address information, carrier information corresponding to another radio link control bearer configuration that is in the plurality of radio link control bearer configurations and that is other than the first radio link control bearer configuration, or the like. In another example, the sidelink radio bearer configuration may alternatively not include the address information, carrier information corresponding to another radio link control bearer configuration that is in the plurality of radio link control bearer configurations and that is other than the first radio link control bearer configuration, or the like. However, the sidelink radio bearer configuration is associated with or corresponding to the address information, the carrier information corresponding to the another radio link control bearer configuration that is in the plurality of radio link control bearer configurations and that is other than the first radio link control bearer configuration, or the like.

Manner 3: The first terminal device obtains the first configuration in a preconfiguration manner.

Optionally, when the first terminal device is in an OOC state, the first terminal device may obtain the first configuration in the preconfiguration manner. In an example, the first terminal device obtains the preconfigured first configuration via the network device. For example, in this case, the network device is a core network. In another example, when the first terminal device needs the first configuration, the first terminal device may obtain the first configuration by using a locally pre-stored configuration. The first configuration may be pre-determined by the network device and sent to the first terminal device for storage, or the first configuration may be preconfigured in a chip at the factory. Optionally, for an implementation process in which the network device determines the first configuration, refer to the implementation process in Manner 1 or Manner 2. Details are not described herein again.

It should be noted that the network device in Manner 1, Manner 2, or Manner 3 may alternatively determine the first configuration by using the following implementation process. Optionally, the network device may alternatively not specify a specific radio link control bearer configuration with which the first carrier has an association relationship. The network device may generate the first configuration based on the packet data convergence protocol entity configuration and the plurality of radio link control bearer configurations, or may generate the first configuration based on the plurality of radio link control bearer configurations. The first configuration does not include the first carrier having an association relationship with a specific radio link control bearer configuration. It should be understood that, the network device may specify specific carriers with which the plurality of radio link control bearer configurations respectively have association relationships, or may not specify specific carriers with which the plurality of radio link control bearer configurations respectively have association relationships. It should be noted that when the network device does not specify a specific radio link control bearer configuration with which the first carrier has an association relationship, the terminal device may determine the specific radio link control bearer configuration with which the first carrier has the association relationship. In this way, in the method, the first terminal device can broadcast or multicast, on the first carrier, data corresponding to a radio link control bearer entity established by using the first radio link control bearer configuration. In this way, normal data transmission between a terminal device that supports the SL CA and a terminal device that does not support the SL CA can be implemented, and sidelink communication reliability is ensured.

Step 302: The first terminal device multicasts or broadcasts, on the first carrier, the data corresponding to the first radio link control bearer entity.

Optionally, the first terminal device may multicast or broadcast, on the first carrier, the data that passes through the first radio link control bearer entity. Alternatively, it may be understood as that the first terminal device externally multicasts or broadcasts, on the first carrier, the data carried by the first radio link control bearer entity. Alternatively, it may be understood as that the first terminal device may multicast or broadcast the data on the first carrier based on the first radio link control bearer configuration.

In consideration of the PDCP duplication, if the first terminal device uses a PDCP duplication mechanism, one PDCP entity corresponds to two or more radio link control bearer entities. The PDCP duplication mechanism usually means that a PDCP entity duplicates a PDCP PDU, and delivers the PDCP PDU to the two or more associated radio link control bearer entities for processing and transmission. Based on this, after obtaining a plurality of radio link control bearer configurations from the network device, the first terminal device may respectively establish corresponding radio link control bearer entities based on the plurality of radio link control bearer configurations, and may separately transmit same data via the plurality of radio link control bearer entities.

In a possible implementation, when the first configuration includes the packet data convergence protocol entity configuration and the plurality of radio link control bearer configurations, if the first terminal device supports the SL CA, the first terminal device may establish or reconfigure a sidelink radio bearer SLRB based on the packet data convergence protocol entity configuration, the first radio link control bearer configuration, and another radio link control bearer configuration. Then, the first terminal device may perform sidelink communication on the established SLRB. For example, the first terminal device may multicast or broadcast data (for example, SL signaling or SL data) on the established SLRB. The SLRB includes a packet data convergence protocol entity and a plurality of radio link control bearer entities. The plurality of radio link control bearer entities may include the first radio link control bearer entity, and the plurality of radio link control bearer entities may be used to transmit same data.

In another possible implementation, when the first configuration includes the plurality of radio link control bearer configurations, and the first terminal device obtains the packet data convergence protocol entity configuration in another manner, if the first terminal device supports the SL CA, the first terminal device may establish or reconfigure a sidelink radio bearer SLRB based on the packet data convergence protocol entity configuration and the plurality of radio link control bearer configurations. Then, the first terminal device may perform sidelink communication on the established SLRB.

In still another possible implementation, when the first configuration is included in the sidelink radio bearer configuration, or the sidelink radio bearer configuration is used as the first configuration, if the first terminal device supports the SL CA, the first terminal device may establish or reconfigure a sidelink radio bearer SLRB based on the sidelink radio bearer configuration. Then, the first terminal device may perform sidelink communication on the established SLRB.

The following describes, by using the following several possible implementations, an implementation process in which the first terminal device multicasts or broadcasts, on the first carrier after obtaining the first configuration from the network device, the data corresponding to the first radio link control bearer entity.

Manner 1: When the first configuration includes the association relationship between the first radio link control bearer configuration and the first carrier, the first terminal device may establish, when the first terminal device supports the SL CA, the first radio link control bearer entity based on the first radio link control bearer configuration included in the first configuration. A carrier that is used to transmit data and that is corresponding to the logical channel included in the first radio link control bearer entity is the first carrier. Then, the first terminal device may multicast or broadcast, on the first carrier, the data (for example, RLC data or an RLC PDU) corresponding to the first radio link control bearer entity.

Manner 2: When the first terminal device obtains indication information from the network device, and the indication information indicates that the first radio link control bearer configuration has the association relationship with the first carrier, the first terminal device may establish, when the first terminal device supports the SL CA, the first radio link control bearer entity based on the first radio link control bearer configuration included in the first configuration. Then, the first terminal device may multicast or broadcast, on the first carrier, the data corresponding to the first radio link control bearer entity established by using the first radio link control bearer configuration.

Manner 3: When the first configuration does not include the association relationship between the first radio link control bearer configuration and the first carrier, and the first terminal device does not obtain indication information from the network device, the first terminal device may select, when the first terminal device supports the SL CA, one radio link control bearer configuration (for example, the first radio link control bearer configuration) from the plurality of radio link control bearer configurations to establish an association relationship with the first carrier, or may select a plurality of first radio link control bearer configurations from the plurality of radio link control bearer configurations to establish association relationships with the first carrier. Then, after establishing the first radio link control bearer entity corresponding to the first radio link control bearer configuration, the first terminal device may multicast or broadcast, on the first carrier, the data corresponding to the first radio link control bearer entity established by using the first radio link control bearer configuration.

It can be learned from step 301 and step 302 that, if one or more first radio link control bearer configurations have an association relationship with the first carrier, when the first terminal device needs to transmit data (for example, sidelink data) to the outside, the first terminal device may multicast or broadcast, via the first radio link control bearer entity and the first carrier, the data that needs to be transmitted. This can effectively ensure that a receiving terminal device that does not support the SL CA can normally receive the data from the first terminal device on the first carrier. In this way, normal data transmission between a terminal device that supports the SL CA and a terminal device that does not support the SL CA can be implemented. In this way, the reliability of the sidelink communication can be ensured, and sidelink communication quality can be effectively improved.

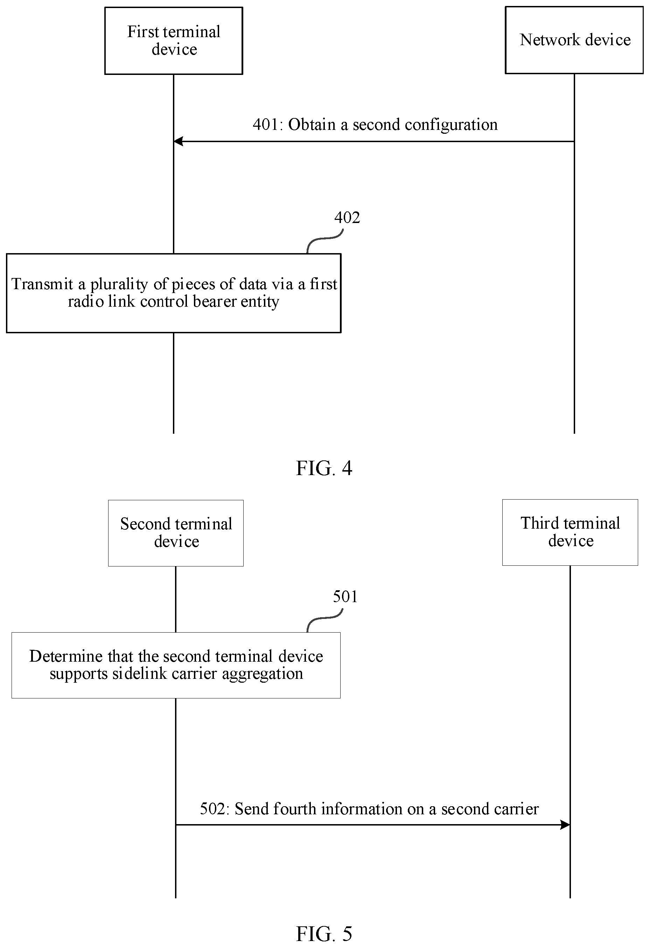

FIG. 4 is an example of a schematic flowchart of another communication method according to an embodiment of this application. The method is applicable to the architectures of the communication systems shown in FIG. 1a and FIG. 1b. A procedure of the method may be implemented by exchanging data between a plurality of communication apparatuses (for example, a first communication apparatus and a second communication apparatus). To facilitate description of technical solutions provided in this embodiment of this application, the following describes, by using an example in which the first communication apparatus is a first terminal device and the second communication apparatus is a network device, a procedure of implementing the communication method by exchanging data between the first communication apparatus and the second communication apparatus. As shown in FIG. 4, the method includes the following steps.

Step 401: The first terminal device obtains a second configuration from the network device.

In a possible implementation, the second configuration may include a packet data convergence protocol PDCP split configuration (for example, a Data Split Threshold configuration in more than one RLC configuration), and the PDCP split configuration indicates to transmit a plurality of pieces of data (for example, a plurality of pieces of to-be-transmitted data, where the plurality of pieces of to-be-transmitted data may be same data or may be different data, which is not limited in this embodiment of this application) in the first terminal device via a plurality of radio link control bearer entities. The plurality of radio link control bearer entities are respectively established by the first terminal device based on a plurality of radio link control bearer configurations. Optionally, in the PDCP split configuration, the plurality of radio link control bearer configurations respectively have association relationships with different carriers. In other words, radio link control entities respectively established by using the plurality of radio link control bearer configurations have association relationships with different carriers. Each radio link control bearer configuration may include one radio link control entity configuration and one logical channel configuration, and the one logical channel configuration may have an association relationship with a carrier corresponding to the radio link control bearer configuration. Optionally, the different carriers may include a first carrier. In an example, the second configuration may be included in a packet data convergence protocol entity configuration. In another example, a packet data convergence protocol entity configuration may be used as the second configuration, and the packet data convergence protocol entity configuration includes the PDCP split configuration.

In another possible implementation, the second configuration may alternatively not include the PDCP split configuration. For example, the second configuration may include but is not limited to a packet data convergence protocol entity configuration, a radio link control bearer configuration, address information, carrier information, or the like. Optionally, there may be one or more packet data convergence protocol entity configurations, one or more radio link control bearer configurations, one or more pieces of address information, one or more pieces of carrier information, or the like.

The following describes the PDCP split configuration by using an example. For example, the first terminal device has 10 pieces of data that need to be transmitted, and the first terminal device corresponds to two radio link control bearer entities (for example, a radio link control bearer entity 1 and a radio link control bearer entity 2). Optionally, the radio link control bearer entity 1 may be associated with one or more carriers, the radio link control bearer entity 2 is associated with one or more carriers, and the carrier associated with the radio link control bearer entity 1 may be the same as or different from the carrier associated with the radio link control bearer entity 2. For example, the radio link control bearer entity 1 is associated with a carrier 1, and the radio link control bearer entity 2 is associated with a carrier 2. When the first terminal device applies the PDCP split configuration, the first terminal device may transmit one part of the 10 pieces of data via the carrier 1 on the radio link control bearer entity 1, and transmit the other part of the 10 pieces of data via the carrier 2 on the radio link control bearer entity 2.

For example, the following describes, by using the following several possible implementations, an implementation process in which the first terminal device obtains the second configuration from the network device.

Implementation 1: The first terminal device sends sixth information to the network device. The network device receives the sixth information. In an example, the sixth information may indicate that the first terminal device supports SL CA and/or may indicate that a destination address supports the SL CA. The destination address may indicate a receiving terminal device with which the first terminal device performs sidelink communication. In another example, the sixth information may alternatively indicate that the first terminal device does not support SL CA and/or may indicate that a destination address does not support the SL CA. Optionally, the SL CA may include sidelink SL packet data convergence protocol entity PDCP split (split).

For example, the sixth information may be carried in a terminal device capability information message or a sidelink terminal device information message. When the first terminal device is in a radio resource control connected state, the first terminal device may send the terminal device capability information message or the sidelink terminal device information message to the network device. The sidelink terminal device information message is used to request the second configuration, or may be used to request a sidelink radio bearer configuration, and the sidelink radio bearer configuration includes the second configuration. Optionally, when the sixth information is carried in the terminal device capability information message, after sending the terminal device capability information message to the network device, the first terminal device further sends the sidelink terminal device information message to the network device.

In a possible manner, the process of obtaining the second configuration by the first terminal device further includes: The first terminal device obtains seventh information. Optionally, before the first terminal device sends the sixth information to the network device, an access stratum of the first terminal device may obtain the seventh information from an upper layer of the first terminal device. In a possible implementation, the seventh information may indicate that the destination address supports the SL CA, or may indicate that the destination address does not support the SL CA. In another possible implementation, the seventh information may alternatively indicate that the first terminal device supports the SL CA, or may indicate that the first terminal device does not support the SL CA. It should be understood that the first terminal device may alternatively not need to learn, from the upper layer, whether the first terminal device has an SL CA capability, and whether the first terminal device has the capability of supporting the SL CA is configured in the first terminal device. Optionally, the first terminal device may alternatively obtain, from a network device of a cell on which the first terminal device camps, related information about whether the first terminal device supports the SL CA, or may obtain, from the receiving terminal device, the related information about whether the first terminal device supports the SL CA. Optionally, the seventh information may alternatively include an association relationship between a service type and the destination address and/or information about a carrier supported by the service type (for example, a name, an index, or an identifier of the carrier).

After receiving the sidelink terminal device information message from the first terminal device, the network device may determine the second configuration based on the sixth information. Then, the network device may transmit the second configuration to the first terminal device. The following describes, by using the following several possible examples, an implementation process in which the network device determines the second configuration in Manner 1.

Example 1: When the sixth information indicates that the first terminal device supports the SL CA, and the destination address supports the SL CA, to implement that the plurality of pieces of data in the first terminal device can be transmitted via a plurality of radio link control bearer entities, the network device may map (or associate) different carriers to a plurality of corresponding radio link control bearer configurations corresponding to the packet data convergence protocol entity configuration. Optionally, the different carriers may include the first carrier. Then, the network device may generate the PDCP split configuration based on the different carriers respectively mapped to the plurality of radio link control bearer configurations and information indicating that the first terminal device performs split transmission of the plurality of pieces of data via the plurality of radio link control bearer entities, and may generate the second configuration based on the PDCP split configuration. The second configuration may further include an association relationship between the first carrier and a first radio link control bearer configuration.

Example 2: When the sixth information indicates that the first terminal device supports the SL CA and the destination address does not support the SL CA, to implement normal data transmission between the first terminal device that does not support the SL CA and a receiving terminal device that supports the SL CA, the network device may select one radio link control bearer configuration (for example, a first radio link control bearer configuration) from a plurality of radio link control bearer configurations corresponding to the packet data convergence protocol entity configuration to establish an association relationship with the first carrier. Then, the network device may generate the second configuration based on the packet data convergence protocol entity configuration, the first radio link control bearer configuration, and an association relationship between the first radio link control bearer configuration and the first carrier. The second configuration does not include the PDCP split configuration, but includes the packet data convergence protocol entity configuration, the first radio link control bearer configuration, the association relationship between the first carrier and the first radio link control bearer configuration, and the like. In other words, the second configuration may indicate the first terminal device to transmit the plurality of pieces of data in the first terminal device on a first radio link control bearer entity via the first carrier. In this way, the first terminal device may transmit the plurality of pieces of data in the first terminal device to the receiving terminal device that does not support the SL CA.

Example 3: When the sixth information indicates that the first terminal device does not support the SL CA, the network device may map (or associate) the first carrier to one radio link control bearer configuration (for example, a first radio link control bearer configuration) corresponding to the packet data convergence protocol entity configuration. Then, the network device may generate the second configuration based on the packet data convergence protocol entity configuration, the first radio link control bearer configuration, and an association relationship between the first radio link control bearer configuration and the first carrier. The second configuration does not include the PDCP split configuration, but includes the packet data convergence protocol entity configuration, the first radio link control bearer configuration, and the association relationship between the first carrier and the first radio link control bearer configuration.

Implementation 2: When camping on or connecting to one of a plurality of cells included in a coverage area of the network device, the first terminal device may obtain the second configuration multicast or broadcast by the network device.

In a possible implementation, after generating the second configuration in advance or proactively, the network device may externally multicast or broadcast the second configuration in a communication mode like multicast communication or broadcast communication.

In another possible implementation, after generating the second configuration in advance or proactively, the network device may alternatively encapsulate the second configuration into a sidelink radio bearer configuration. Then, the network device may externally multicast or broadcast the sidelink radio bearer configuration in a communication mode like multicast communication or broadcast communication.

Optionally, the network device may alternatively send the second configuration to the first terminal device in a unicast mode.

For example, the sidelink radio bearer configuration may include but is not limited to the packet data convergence protocol entity configuration, one or more radio link control bearer configurations, carrier information corresponding to the one or more radio link control bearer configurations, and the like.

For example, the following describes, by using the following several possible examples, an implementation process in which the network device generates the second configuration in advance or proactively.

Example 1: The network device may respectively map (or associate) different carriers to a plurality of radio link control bearer configurations corresponding to the packet data convergence protocol entity configuration. Then, the network device may generate the PDCP split configuration based on the different carriers respectively mapped to the plurality of radio link control bearer configurations and information indicating that the first terminal device performs split transmission of the plurality of pieces of data via a plurality of radio link control bearer entities, and may generate the second configuration based on the PDCP split configuration, where the second configuration includes the PDCP split configuration.

Example 2: The network device may multicast or broadcast two (which may alternatively be referred to as two sets of) sidelink radio bearer configurations to a terminal device for a same quality of service (quality of service, QoS) flow. A packet data convergence protocol entity configuration in one sidelink radio bearer configuration includes the PDCP split configuration, and the PDCP split configuration is used as the second configuration. A packet data convergence protocol entity configuration in the other sidelink radio bearer configuration does not include the PDCP split configuration, and a radio link control bearer configuration included in the sidelink radio bearer configuration may have an association relationship with the first carrier. Optionally, the network device may alternatively not specify, in the sidelink radio bearer configuration, a specific radio link control bearer configuration with which the first carrier has an association relationship, or may not specify, in the sidelink radio bearer configuration, specific carriers with which one or more radio link control bearer configurations respectively have association relationships. It should be understood that the network device may specify, in the sidelink radio bearer configuration, specific carriers with which one or more radio link control bearer configurations respectively have association relationships. In this way, in the method, the terminal device that receives the two sidelink radio bearer configurations can select, based on an actual requirement of the terminal device, a specific sidelink radio bearer configuration to be applied, so that flexibility is high, and different requirements of the terminal device can be effectively met. Optionally, in Implementation 1, the network device may alternatively use the implementation process in Example 2 when determining the second configuration.

Implementation 3: The first terminal device obtains the second configuration in a preconfiguration manner.

Optionally, when the first terminal device is in an OOC state, the first terminal device may obtain the second configuration in the preconfiguration manner. In an example, the first terminal device obtains the preconfigured second configuration via the network device. For example, in this case, the network device is a core network. In another example, when the first terminal device needs the second configuration, the first terminal device may obtain the second configuration by using a locally pre-stored configuration. The second configuration may be pre-determined by the network device and sent to the first terminal device for storage, or the second configuration may be preconfigured in a chip at the factory. Optionally, for an implementation process in which the network device determines the second configuration, refer to the implementation process in Implementation 1 or Implementation 2. Details are not described herein again.

It should be noted that the network device in Implementation 1, Implementation 2, or Implementation 3 may alternatively determine the second configuration by using the following implementation process. Optionally, the network device may alternatively not specify a specific radio link control bearer configuration with which the first carrier has an association relationship. The network device may generate the second configuration based on the packet data convergence protocol entity configuration and a plurality of radio link control bearer configurations, or may generate the second configuration based on a plurality of radio link control bearer configurations. The second configuration does not include the PDCP split configuration, and does not include an association relationship between the first carrier and a specific radio link control bearer configuration. It should be noted that when the network device does not specify a specific radio link control bearer configuration with which the first carrier has an association relationship, the terminal device may determine the specific radio link control bearer configuration with which the first carrier has the association relationship.

Optionally, the radio link control bearer configuration in Implementation 1, Implementation 2, or Implementation 3 may be generated by a DU. For an implementation process in which the DU generates and sends the radio link control bearer configuration, refer to the implementation process in which the DU generates and sends the first configuration in Manner 1 of step 301. Details are not described herein again. Optionally, the packet data convergence protocol entity configuration in Implementation 1, Implementation 2, or Implementation 3 may be generated by a CU. For an implementation process in which the CU generates and sends the radio link control bearer configuration, refer to the implementation process in which the CU generates and sends the packet data convergence protocol entity configuration in Manner 2 of step 301. Details are not described herein again.

Step 402: The first terminal device transmits the plurality of pieces of data via the first radio link control bearer entity.

The following describes, by using the following several possible implementations, an implementation process in which the first terminal device externally multicasts or broadcasts the plurality of pieces of data in the first terminal device after obtaining the second configuration or the sidelink radio bearer configuration (where the sidelink radio bearer configuration includes the second configuration) from the network device.

Implementation 1: It is assumed that the first terminal device does not support the SL CA or the destination address does not support the SL CA. In an example, when the second configuration is not included in the sidelink radio bearer configuration, if the second configuration includes the PDCP split configuration, the first terminal device may not apply the PDCP split configuration, but may apply another received configuration (for example, one or more radio link control bearer configurations and the packet data convergence protocol entity configuration). When the second configuration includes the association relationship between the first carrier and the first radio link control bearer configuration, after the first terminal device establishes or reconfigures a sidelink radio bearer SLRB (where the SLRB may include a packet data convergence protocol entity, one or more radio link control bearer entities, and the like) by applying the another configuration, if the first terminal device needs to transmit the plurality of pieces of data, the first terminal device may transmit the plurality of pieces of data via the first radio link control bearer entity and the first carrier. The SLRB includes the first radio link control bearer entity corresponding to the first radio link control bearer configuration. When the second configuration does not include the association relationship between the first carrier and the first radio link control bearer configuration, and the first terminal device does not obtain the association relationship between the first carrier and the first radio link control bearer configuration from the network device, the first terminal device may select one radio link control bearer configuration (for example, the first radio link control bearer configuration) from the one or more radio link control bearer configurations to establish an association relationship with the first carrier. Then, after the first terminal device establishes or reconfigures the SLRB based on the another configuration, if the first terminal device needs to transmit the plurality of pieces of data, the first terminal device may transmit the plurality of pieces of data via the first radio link control bearer entity and the first carrier. In this way, the first terminal device may transmit the plurality of pieces of data on the first radio link control bearer entity via the first carrier, to implement normal data transmission between a terminal device that does not support the SL CA and a terminal device that supports the SL CA. This ensures sidelink communication reliability.

If the second configuration does not include the PDCP split configuration, the first terminal device may apply the second configuration and the another received configuration. When the second configuration includes the association relationship between the first carrier and the first radio link control bearer configuration, after the first terminal device establishes or reconfigures the SLRB by applying the second configuration and the another received configuration, if the first terminal device needs to transmit the plurality of pieces of data, the first terminal device may transmit the plurality of pieces of data via the first radio link control bearer entity and the first carrier. When the second configuration does not include the association relationship between the first carrier and the first radio link control bearer configuration, and the first terminal device does not obtain the association relationship between the first carrier and the first radio link control bearer configuration from the network device, the first terminal device may select one radio link control bearer configuration (for example, the first radio link control bearer configuration) from the one or more radio link control bearer configurations to establish an association relationship with the first carrier. Then, after the first terminal device establishes or reconfigures the SLRB based on the second configuration and the another received configuration, if the first terminal device needs to transmit the plurality of pieces of data, the first terminal device may transmit the plurality of pieces of data via the first radio link control bearer entity and the first carrier.

In another example, when the second configuration is included in the sidelink radio bearer configuration, if the second configuration includes the PDCP split configuration, the first terminal device may not apply the PDCP split configuration, but may apply another configuration (for example, the packet data convergence protocol entity configuration and one or more radio link control bearer configurations) that is in the sidelink radio bearer configuration and that is other than the PDCP split configuration. When the second configuration includes the association relationship between the first carrier and the first radio link control bearer configuration, after the first terminal device establishes or reconfigures the SLRB by applying the another configuration that is in the sidelink radio bearer configuration and that is other than the PDCP split configuration, if the first terminal device needs to transmit the plurality of pieces of data, the first terminal device may transmit the plurality of pieces of data via the first radio link control bearer entity and the first carrier. When the second configuration does not include the association relationship between the first carrier and the first radio link control bearer configuration, and the first terminal device does not obtain the association relationship between the first carrier and the first radio link control bearer configuration from the network device, the first terminal device may select one radio link control bearer configuration (for example, the first radio link control bearer configuration) from the one or more radio link control bearer configurations to establish an association relationship with the first carrier. Then, after the first terminal device establishes or reconfigures the SLRB based on the another configuration that is in the sidelink radio bearer configuration and that is other than the PDCP split configuration, if the first terminal device needs to transmit the plurality of pieces of data, the first terminal device may transmit the plurality of pieces of data via the first radio link control bearer entity and the first carrier.

If the second configuration does not include the PDCP split configuration, the first terminal device may apply the sidelink radio bearer configuration. When the second configuration includes the association relationship between the first carrier and the first radio link control bearer configuration, after the first terminal device establishes or reconfigures the SLRB by applying the sidelink radio bearer configuration, if the first terminal device needs to transmit the plurality of pieces of data, the first terminal device may transmit the plurality of pieces of data via the first radio link control bearer entity and the first carrier. When the second configuration does not include the association relationship between the first carrier and the first radio link control bearer configuration, and the first terminal device does not obtain the association relationship between the first carrier and the first radio link control bearer configuration from the network device, the first terminal device may select one radio link control bearer configuration (for example, the first radio link control bearer configuration) from the one or more radio link control bearer configurations to establish an association relationship with the first carrier. Then, after the first terminal device establishes or reconfigures the SLRB based on the sidelink radio bearer configuration, if the first terminal device needs to transmit the plurality of pieces of data, the first terminal device may transmit the plurality of pieces of data via the first radio link control bearer entity and the first carrier.

Optionally, when the first terminal device supports the SL CA and the destination address supports the SL CA, if the second configuration obtained by the first terminal device from the network device includes the PDCP split configuration, the first terminal device may apply the PDCP split configuration. In an example, when the second configuration includes the association relationships respectively between the plurality of radio link control bearer configurations and the different carriers, or the first terminal device obtains the association relationships respectively between the plurality of radio link control bearer configurations and the different carriers from the network device, after establishing or reconfiguring the SLRB based on the PDCP split configuration, another configuration that is in the packet data convergence protocol entity configuration and that is other than the PDCP split configuration, the plurality of radio link control bearer configurations, and the like, the first terminal device may externally multicast or broadcast the plurality of pieces of data (for example, SL signaling or SL data) via the plurality of radio link control bearer entities included in the SLRB. The SLRB includes the packet data convergence protocol entity and the plurality of radio link control bearer entities. In another example, when the second configuration does not include the association relationships respectively between the plurality of radio link control bearer configurations and the different carriers, and the first terminal device does not learn, from the network device, specific carriers with which the plurality of radio link control bearer configurations respectively have association relationships, the first terminal device may respectively allocate corresponding carriers to the plurality of radio link control bearer configurations based on information about carriers supported by the first terminal device, to establish the association relationships between the plurality of radio link control bearer configurations and the different carriers. Then, after the first terminal device establishes or reconfigures the SLRB based on the sidelink radio bearer configuration, if the first terminal device needs to transmit the plurality of pieces of data, the first terminal device may externally multicast or broadcast the plurality of pieces of data via the plurality of radio link control bearer entities included in the SLRB.

Implementation 2: If the first terminal device does not support the SL CA or the destination address does not support the SL CA, when the first terminal device obtains two sidelink radio bearer configurations from the network device, the first terminal device may identify the two sidelink radio bearer configurations. When identifying that one sidelink radio bearer configuration does not include the PDCP split configuration, the first terminal device may apply the sidelink radio bearer configuration. It may be understood that the two sidelink radio bearer configurations are sidelink bearer configurations corresponding to the plurality of pieces of data. When the sidelink radio bearer configuration includes the association relationship between the first carrier and the first radio link control bearer configuration, or the first terminal device obtains the association relationship between the first radio link control bearer configuration and the first carrier from the network device, after the first terminal device establishes or reconfigures the SLRB by using the sidelink radio bearer configuration, if the first terminal device needs to transmit the plurality of pieces of data, the first terminal device may transmit the plurality of pieces of data via the first radio link control bearer entity and the first carrier. The SLRB includes the first radio link control bearer entity corresponding to the first radio link control bearer configuration. When the sidelink radio bearer configuration does not include the association relationship between the first carrier and the first radio link control bearer configuration, and the first terminal device does not obtain the association relationship between the first carrier and the first radio link control bearer configuration from the network device, the first terminal device may select one radio link control bearer configuration (for example, the first radio link control bearer configuration) from the one or more radio link control bearer configurations to establish an association relationship with the first carrier. Then, after the first terminal device establishes or reconfigures the SLRB based on the sidelink radio bearer configuration, if the first terminal device needs to transmit the plurality of pieces of data, the first terminal device may transmit the plurality of pieces of data via the first radio link control bearer entity and the first carrier.

Optionally, if the first terminal device supports the SL CA and the destination address supports the SL CA, when the first terminal device obtains two sidelink radio bearer configurations from the network device, the first terminal device may identify the two sidelink radio bearer configurations. When identifying that one sidelink radio bearer configuration includes the PDCP split configuration, the first terminal device may apply the sidelink radio bearer configuration. In an example, when the sidelink radio bearer configuration includes the association relationships respectively between the plurality of radio link control bearer configurations and the different carriers, or the first terminal device obtains the association relationships respectively between the plurality of radio link control bearer configurations and the different carriers from the network device, after the first terminal device establishes or reconfigures the SLRB by applying the sidelink radio bearer configuration, if the first terminal device needs to transmit the plurality of pieces of data, the first terminal device may externally multicast or broadcast the plurality of pieces of data via the plurality of radio link control bearer entities included in the SLRB. In another example, when the sidelink radio bearer configuration does not include the association relationships respectively between the plurality of radio link control bearer configurations and the different carriers, and the first terminal device does not learn, from the network device, specific carriers with which the plurality of radio link control bearer configurations respectively have association relationships, the first terminal device may respectively allocate corresponding carriers to the plurality of radio link control bearer configurations based on information about carriers supported by the first terminal device, to establish the association relationships between the plurality of radio link control bearer configurations and the different carriers. Then, after the first terminal device establishes or reconfigures the SLRB based on the sidelink radio bearer configuration, if the first terminal device needs to transmit the plurality of pieces of data, the first terminal device may externally multicast or broadcast the plurality of pieces of data via the plurality of radio link control bearer entities included in the SLRB.

In addition, when choosing not to apply the PDCP split configuration, the first terminal device may send first information to the network device. The first information may indicate that the first terminal device does not apply the PDCP split configuration. In an example, when the first terminal device does not support the SL CA, the first information may carry (or be associated with) information indicating that the first terminal device does not support the SL CA. In another example, when the destination address does not support the SL CA, the first information may carry (or be associated with) a destination address, and the destination address is a destination address that does not support the SL CA. In this way, in the method, when subsequently configuring, for the first terminal device or the destination address requested by the first terminal device, the sidelink radio bearer configuration used to establish the SLRB, the network device may not need to configure the PDCP split configuration, so that configuration of the sidelink radio bearer configuration is more targeted and different requirements of the terminal device can be met.

It can be learned from step 401 and step 402 that, when the first terminal device does not support the SL CA or the destination address corresponding to the receiving terminal device does not support the SL CA, the first terminal device may choose not to apply the PDCP split configuration, and may transmit the plurality of pieces of data in the first terminal device via the first radio link control bearer entity corresponding to the first carrier. This ensures that the receiving terminal device that does not support the SL CA can normally receive the plurality of pieces of data from the first terminal device on the first carrier, and implements normal data transmission between a terminal device that supports the SL CA and a terminal device that does not support the SL CA. In this way, the reliability of the sidelink communication can be ensured, and sidelink communication quality can be effectively improved.

FIG. 5 is an example of a schematic flowchart of still another communication method according to an embodiment of this application. The method is applicable to the architectures of the communication systems shown in FIG. 1a and FIG. 1b. A procedure of the method may be implemented by exchanging data between a plurality of communication apparatuses (for example, a first communication apparatus and a second communication apparatus). Optionally, the first communication apparatus may be a second terminal device or a component (for example, a chip, a chip system, or a circuit) that can support the second terminal device in implementing a needed function of the method, and the second communication apparatus may be a third terminal device or a component (for example, a chip, a chip system, or a circuit) that can support the third terminal device in implementing a needed function of the method. For example, the second terminal device may be the terminal device 120i shown in FIG. 1a, and the third terminal device may be the terminal device 120j shown in FIG. 1a. Alternatively, the second terminal device may be the terminal device 120f shown in FIG. 1a, and the third terminal device may be the terminal device 120g shown in FIG. 1a. Alternatively, the second terminal device may be the terminal device 120a shown in FIG. 1a, and the third terminal device may be the terminal device 120b shown in FIG. 1a. Alternatively, the second terminal device may be the terminal device 400 shown in FIG. 1b, and the third terminal device may be the terminal device 501 or the terminal device 502 shown in FIG. 1b. To facilitate description of technical solutions provided in this embodiment of this application, the following describes, by using an example in which the first communication apparatus is the second terminal device and the second communication apparatus is the third terminal device, a procedure of implementing the communication method by exchanging data between the first communication apparatus and the second communication apparatus. As shown in FIG. 5, the method includes the following steps.

Step 501: The second terminal device determines that the second terminal device supports sidelink carrier aggregation.

Optionally, the sidelink SL carrier aggregation CA may include sidelink cross-carrier scheduling and/or sidelink cross-carrier feedback.

The following describes, by using the following several possible implementations, an implementation process in which the second terminal device determines that the second terminal device supports the SL CA.

Manner 1: An access stratum of the second terminal device obtains eighth information from an upper layer of the second terminal device. The second terminal device may determine, based on the eighth information, that the second terminal device supports the SL CA. The eighth information indicates that the second terminal device supports the SL CA.

Manner 2: The second terminal device obtains capability information from a network device. The second terminal device may determine, based on the capability information, that the second terminal device supports the sidelink carrier aggregation. Optionally, the capability information indicates that the second terminal device supports the sidelink carrier aggregation.

Manner 3: A capability of supporting the sidelink carrier aggregation is configured in the second terminal device, and the second terminal device may learn of the capability.

Optionally, any two or more of Manner 1, Manner 2, and Manner 3 may be used in combination.

Step 502: The second terminal device sends fourth information to the third terminal device on a second carrier. The third terminal device receives the fourth information.

The third terminal device is a receiving terminal device with which the second terminal device performs sidelink communication, and the fourth information (for example, sidelink control information (Sidelink Control Information, SCI)) may indicate that the second terminal device and the third terminal device perform sidelink transmission on a third carrier. The second carrier and/or the third carrier do/does not include a first carrier, the first carrier is generally a carrier corresponding to a terminal device that performs single-carrier communication, and the second carrier is different from the third carrier. It should be understood that, that the second carrier and/or the third carrier do/does not include the first carrier may mean that the second carrier and/or the third carrier are/is different from the first carrier. Optionally, the second carrier and/or the third carrier may be a carrier associated (or mapped or corresponding) to a destination address corresponding to the third terminal device. In this way, in the method, it is specified that the second carrier and/or the third carrier do/does not to include the first carrier. This can not only ensure that a receiving terminal device that supports the SL CA can normally receive, on the third carrier, sidelink data from the second terminal device, but also ensure that a receiving terminal device that does not support the SL CA can normally receive, on the first carrier, the sidelink data from the second terminal device, thereby improving sidelink communication reliability.

Optionally, the access stratum of the second terminal device may obtain fifth information from the upper layer of the second terminal device. In a possible implementation, when the fifth information indicates that the destination address corresponding to the third terminal device supports the SL CA, the second carrier and/or the third carrier may include the first carrier. It should be understood that, that the second carrier and/or the third carrier include/includes the first carrier may mean that the second carrier and/or the third carrier are/is the same as the first carrier, and that the destination address corresponding to the third terminal device supports the SL CA may mean that the destination address corresponding to the third terminal device supports the second carrier and/or the third carrier. In this way, when the destination address corresponding to the third terminal device supports the SL CA, regardless of a specific carrier on which the second terminal device sends scheduling information (for example, the SCI information), or regardless of a specific carrier on which the second terminal device transmits the sidelink data, the third terminal device can normally receive the sidelink data on the corresponding carrier. In another possible implementation, when the fifth information indicates that the destination address corresponding to the third terminal device does not support the SL CA, the second carrier and/or the third carrier do/does not include the first carrier. In this way, when the destination address corresponding to the third terminal device does not support the SL CA, although the third terminal device cannot receive the scheduling information or the sidelink data sent by the second terminal device on the second carrier or the third carrier, it can be ensured that the third terminal device can normally receive the sidelink data that is transmitted by the second terminal device on the first carrier.

It should be understood that, that the destination address corresponding to the third terminal device does not support the SL CA may mean that the destination address corresponding to the third terminal device does not support the second carrier and/or the third carrier. In this case, when the destination address corresponding to the third terminal device does not support the second carrier and/or the third carrier, if the second carrier and/or the third carrier include/includes the first carrier, the third terminal device cannot receive the fourth information from the second terminal device, and certainly cannot receive the sidelink data that is transmitted by the second terminal device on the second carrier or the third carrier. In addition, when the destination address corresponding to the third terminal device does not support the second carrier and/or the third carrier, if the second carrier and/or the third carrier do/does not include the first carrier, the third terminal device cannot receive the fourth information from the second terminal device, but can normally receive the sidelink data that is transmitted by the second terminal device on the first carrier.

Optionally, when the destination address corresponding to the third terminal device supports the SL CA, the third terminal device may feed back, to the second terminal device on the second carrier or the third carrier, a status of receiving, by the third terminal device, the sidelink data that is transmitted by the second terminal device on the third carrier. For example, the third terminal device may send a hybrid automatic repeat request (Hybrid Automatic Repeat Request, HARQ) feedback to the second terminal device on the second carrier or the third carrier. The HARQ feedback may indicate a sidelink transmission receiving status of the third terminal device on the third carrier, for example, indicate successful reception (acknowledgement, ACK) or indicate failed reception (negative acknowledgement, NACK).

For example, the following describes, by using the following several possible implementations, an implementation process in which the third terminal device sends the HARQ feedback to the second terminal device on the second carrier or the third carrier.

Implementation 1: When the fourth information indicates that the sidelink transmission performed on the third carrier is multicast communication, the third terminal device may send the HARQ feedback to the second terminal device on the second carrier or the third carrier.

Implementation 2: When the fourth information indicates that the sidelink transmission performed on the third carrier is HARQ feedback-enabled communication, the third terminal device may send the HARQ feedback to the second terminal device on the second carrier or the third carrier.

It should be understood that Implementation 1 and Implementation 2 may be used in combination.

It can be learned from the step 501 and step 502 that, when the destination address corresponding to the receiving terminal device does not support the SL CA, it is specified that the second carrier and/or the third carrier do/does not include the first carrier. This can ensure that the receiving terminal device that does not support the SL CA can normally receive, on the first carrier, the sidelink data from the second terminal device, and can implement normal data transmission between a terminal device that supports the SL CA and a terminal device that does not support the SL CA. In this way, the reliability of the sidelink communication can be ensured, and sidelink communication quality can be effectively improved.

It should be noted that in descriptions of this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first", "second", and "third" in embodiments of this application are used to distinguish between a plurality of objects, and are not used to limit a sequence, a time sequence, priorities, or importance degrees of the plurality of objects. In addition, the terms "include", "have", and variations thereof that appear in this application all mean "including but not limited to", unless otherwise specifically emphasized in another manner.

In addition, it should be noted that each step in the foregoing embodiments may be performed by a corresponding device, or may be performed by a component like a chip, a processor, or a chip system in the device. This is not limited in embodiments of this application. The foregoing embodiments are described only by using an example in which each step is performed by the corresponding device.

It should be noted that in the foregoing embodiments, a part of steps may be selected for implementation, or a sequence of steps in the figure may be adjusted for implementation. This is not limited in this application. It should be understood that performing a part of steps in the figure, adjusting a sequence of steps, or combining the two manners for specific implementation shall fall within the protection scope of this application.

It may be understood that, to implement functions in the foregoing embodiments, devices in the foregoing embodiments include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

It should be noted that the "step" in embodiments of this application is merely an example, is a representation method used to better understand embodiments, and does not constitute a substantive limitation on execution of the solutions in this application. For example, the "step" may also be understood as a "feature". In addition, the step does not constitute any limitation on an execution sequence of the solutions in this application, and a new technical solution formed through an operation, for example, step sequence change, step combination, or step splitting, performed on this basis without affecting implementation of the overall solutions also falls within the scope disclosed in this application.

Based on a same concept, an embodiment of this application further provides a possible communication apparatus. The communication apparatus is applicable to the architectures of the communication systems shown in FIG. 1a and FIG. 1b. Optionally, the communication apparatus may be a communication device (for example, a first communication apparatus or a second communication apparatus) or a component (for example, a chip, a chip system, or a circuit) that can support the communication device in implementing a needed function of the communication method. In an example, when the communication apparatus is the first communication apparatus (for example, a first terminal device or a second terminal device), the communication apparatus is configured to implement the technical solutions related to the first communication apparatus in the foregoing embodiments, or a module (for example, a chip) of the communication apparatus is configured to implement the technical solutions related to the first communication apparatus in the foregoing embodiments. Therefore, beneficial effects of the first communication apparatus in the foregoing embodiments can also be implemented. For example, the first communication apparatus may be the terminal device (for example, the terminal device 120f, the terminal device 120g, the terminal device 120a, the terminal device 120b, or the terminal device 120i) shown in FIG. 1a, or may be the terminal device (for example, the terminal device 400) shown in FIG. 1b. For example, the communication apparatus is a chip disposed in the first communication apparatus. When the communication apparatus is the chip, the communication apparatus includes a transceiver and a processor, and does not include a memory. The transceiver exists as an input/output interface, and the input/output interface is used by the chip to implement receiving and sending of the first communication apparatus. The input/output interface may include an input interface and/or an output interface. The input interface may implement receiving of the first communication apparatus, and the output interface may be configured to implement sending of the first communication apparatus. The processor is configured to read and execute a corresponding computer program or instructions, so that a corresponding function of the first communication apparatus is implemented. Optionally, when the chip implements the corresponding function of the first communication apparatus in the foregoing embodiments, the input/output interface may implement receiving and sending operations performed by the first communication apparatus in the foregoing embodiments, and the processor may implement another operation other than the receiving and sending operations performed by the first communication apparatus in the foregoing embodiments. Specifically, for related specific descriptions, refer to related descriptions of the first communication apparatus in the method embodiments shown in FIG. 3 to FIG. 5. Details are not described herein again.

In another example, when the communication apparatus is the second communication apparatus (for example, a network device or a third terminal device), the communication apparatus is configured to implement the technical solutions related to the second communication apparatus in the foregoing embodiments, or a module (for example, a chip) of the communication apparatus is configured to implement the technical solutions related to the second communication apparatus in the foregoing embodiments. Therefore, beneficial effects of the second communication apparatus in the foregoing embodiments can also be implemented. For example, when the first terminal device is the terminal device 120f or the terminal device 120g shown in FIG. 1a, the second communication apparatus may be the RAN device 110b shown in FIG. 1a. Alternatively, when the first terminal device is the terminal device 120a or the terminal device 120b shown in FIG. 1a, the second communication apparatus may be the RAN device 110a shown in FIG. 1a. For another example, when the first communication apparatus is the terminal device 400 shown in FIG. 1b, the second communication apparatus may be the terminal device (for example, the terminal device 501 or the terminal device 502) shown in FIG. 1b, or may be the RAN device 600 shown in FIG. 1b. For example, the communication apparatus is a chip disposed in the second communication apparatus. When the communication apparatus is the chip, the communication apparatus includes a transceiver and a processor, and does not include a memory. The transceiver exists as an input/output interface, and the input/output interface is used by the chip to implement receiving and sending of the second communication apparatus. The input/output interface may include an input interface and/or an output interface. The input interface may implement receiving of the second communication apparatus, and the output interface may be configured to implement sending of the second communication apparatus. The processor is configured to read and execute a corresponding computer program or instructions, so that a corresponding function of the second communication apparatus is implemented. Optionally, when the chip implements the corresponding function of the second communication apparatus in the foregoing embodiments, the input/output interface may implement receiving and sending operations performed by the second communication apparatus in the foregoing embodiments, and the processor may implement another operation other than the receiving and sending operations performed by the second communication apparatus in the foregoing embodiments. Specifically, for related specific descriptions, refer to related descriptions of the second communication apparatus in the method embodiments shown in FIG. 3 to FIG. 5. Details are not described herein again.

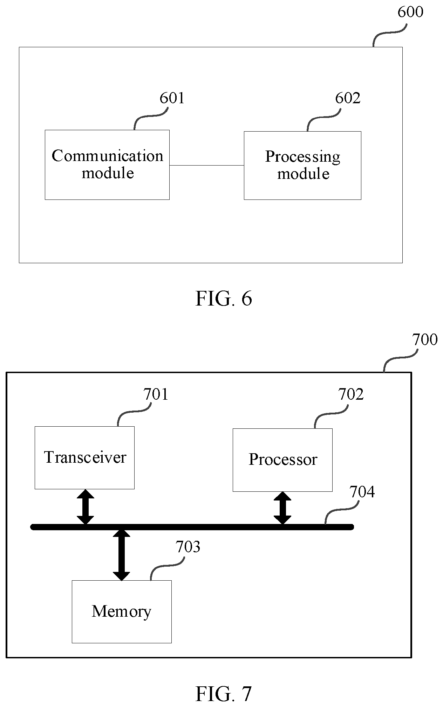

Refer to FIG. 6. A communication apparatus 600 includes a communication module 601 (which may alternatively be referred to as a transceiver module, configured to send and receive data) and a processing module 602. The communication apparatus 600 is configured to implement a function of the first communication apparatus (for example, the first terminal device or the second terminal device) or the second communication apparatus (for example, the network device or the third terminal device) in the method embodiments shown in FIG. 3 to FIG. 5.

Optionally, the communication module 601 may include a receiving module and/or a sending module. The receiving module may be used by the communication apparatus 600 to receive a signal (information, data, or the like), and the sending module may be used by the communication apparatus 600 to send a signal (information, data, or the like). The sending module may send a signal (information, data, or the like) under control of the processing module 602, and the receiving module may receive a signal (information, data, or the like) under control of the processing module 602.

When the communication apparatus 600 is configured to implement a function of the first communication apparatus in the method embodiment shown in FIG. 3, the communication module 601 is configured to obtain a first configuration from the network device. The first configuration includes a first radio link control bearer configuration, and the first radio link control bearer configuration has an association relationship with a first carrier. The first radio link control bearer configuration is one of a plurality of radio link control bearer configurations corresponding to a packet data convergence protocol entity configuration, the first radio link control bearer configuration is used to establish a first radio link control bearer entity, and the first carrier is a carrier corresponding to a terminal device that performs single-carrier communication. The processing module 602 is configured to multicast or broadcast, on the first carrier, data corresponding to the first radio link control bearer entity.

When the communication apparatus 600 is configured to implement a function of the second communication apparatus in the method embodiment shown in FIG. 3, the processing module 602 is configured to determine the first configuration. The communication module 601 is configured to send (or broadcast or the like) the first configuration to the first communication apparatus (for example, the first terminal device).

When the communication apparatus 600 is configured to implement a function of the first communication apparatus in the method embodiment shown in FIG. 4, the communication module 601 is configured to obtain a second configuration from the network device. For example, the second configuration may include a PDCP split configuration, or may not include the PDCP split configuration. The PDCP split configuration indicates that a plurality of pieces of data in the first terminal device are transmitted via a plurality of radio link control bearer entities. The plurality of radio link control bearer entities are respectively established by the first terminal device based on a plurality of radio link control bearer configurations. Optionally, in the PDCP split configuration, the plurality of radio link control bearer configurations respectively have association relationships with different carriers. Optionally, the different carriers may include a first carrier. In an example, the second configuration may be included in a packet data convergence protocol entity configuration. In another example, a packet data convergence protocol entity configuration may be used as the second configuration, and the packet data convergence protocol entity configuration includes the PDCP split configuration. The processing module 602 is configured to transmit the plurality of pieces of data in the first terminal device via a first radio link control bearer entity.

When the communication apparatus 600 is configured to implement a function of the second communication apparatus in the method embodiment shown in FIG. 4, the processing module 602 is configured to determine the second configuration. The communication module 601 is configured to send (or broadcast or the like) the second configuration to the first communication apparatus (for example, the first terminal device).

When the communication apparatus 600 is configured to implement a function of the first communication apparatus in the method embodiment shown in FIG. 5, the processing module 602 is configured to determine that the second terminal device supports sidelink carrier aggregation. The communication module 601 is configured to send fourth information to the third terminal device on a second carrier. The third terminal device is a receiving terminal device with which the second terminal device performs sidelink communication, and the fourth information may indicate that the second terminal device and the third terminal device perform sidelink transmission on a third carrier. The second carrier and/or the third carrier do/does not include a first carrier, the first carrier may be a carrier corresponding to a terminal device that performs single-carrier communication, and the second carrier is different from the third carrier.

When the communication apparatus 600 is configured to implement a function of the second communication apparatus in the method embodiment shown in FIG. 5, the communication module 601 is configured to receive the fourth information from the second terminal device on the second carrier. The communication module 601 is further configured to receive sidelink data from the second terminal device on the third carrier. The communication module 601 is further configured to send a HARQ feedback to the second terminal device on the second carrier or the third carrier.

When the communication apparatus 600 is configured to implement the function of the first communication apparatus or the second communication apparatus in the method embodiments shown in FIG. 3 to FIG. 5, for more detailed descriptions of the communication module 601 and the processing module 602, refer to the related descriptions of the first communication apparatus or the second communication apparatus in the method embodiments shown in FIG. 3 to FIG. 5. Details are not described herein again.

It should be understood that in this embodiment of this application, the communication module 601 may be implemented by a transceiver or a transceiver-related circuit component, and the processing module 602 may be implemented by a processor or a processor-related circuit component.

It should be noted that division into the modules in embodiments of this application is an example, and is merely logical function division. During actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

Based on a same concept, an embodiment of this application further provides a possible communication apparatus. The communication apparatus is applicable to the architecture of the communication system shown in FIG. 1a or FIG. 1b. For example, the communication apparatus may be an apparatus (for example, a first communication apparatus or a second communication apparatus) needed for performing the communication method provided in embodiments of this application, or may be a device including the apparatus needed for performing the communication method provided in embodiments of this application. Optionally, the communication apparatus may alternatively be a chip disposed in the first communication apparatus (or the second communication apparatus). When the communication apparatus is the chip disposed in the first communication apparatus (or the second communication apparatus), the communication apparatus includes a transceiver and a processor, and does not include a memory. The transceiver exists as an input/output interface, and the input/output interface is used by the chip to implement receiving and sending of the communication apparatus. The input/output interface may include an input interface and/or an output interface. The input interface may implement receiving of the communication apparatus, and the output interface may be configured to implement sending of the communication apparatus. The processor is configured to read and execute a corresponding computer program or instructions, so that a corresponding function of the first communication apparatus (or the second communication apparatus) is implemented. Optionally, when the chip implements the corresponding function of the first communication apparatus (or the second communication apparatus) in the foregoing embodiments, the input/output interface may implement receiving and sending operations performed by the first communication apparatus (or the second communication apparatus) in the foregoing embodiments, and the processor may implement another operation other than the receiving and sending operations performed by the first communication apparatus (or the second communication apparatus) in the foregoing embodiments. Specifically, for related specific descriptions, refer to related descriptions in the foregoing embodiments. Details are not described herein again. For example, the communication apparatus is the first communication apparatus (for example, a first terminal device or a second terminal device) or the second communication apparatus (for example, a network device or a third terminal device). When the communication apparatus is configured to implement the technical solutions related to the first communication apparatus in the foregoing embodiments, beneficial effects of the first communication apparatus in the foregoing method embodiments can also be implemented. When the communication apparatus is configured to implement the technical solutions related to the second communication apparatus in the foregoing embodiments, beneficial effects of the second communication apparatus in the foregoing method embodiments can also be implemented.

Refer to FIG. 7. A communication apparatus 700 includes a transceiver 701 and a processor 702. Optionally, the communication apparatus 700 further includes a memory 703. The transceiver 701, the processor 702, and the memory 703 are connected to each other. When the communication apparatus 700 is configured to implement the technical solutions related to the first communication apparatus provided in the foregoing embodiments, the transceiver 701 may be configured to implement a function of the communication module 601 when the communication module 601 performs the technical solutions related to the first communication apparatus, and the processor 702 is configured to implement a function of the processing module 602 when the processing module 602 performs the technical solutions related to the first communication apparatus. When the communication apparatus 700 is configured to implement the technical solutions related to the second communication apparatus provided in the foregoing embodiments, the transceiver 701 may be configured to implement a function of the communication module 601 when the communication module 601 performs the technical solutions related to the second communication apparatus, and the processor 702 is configured to implement a function of the processing module 602 when the processing module 602 performs the technical solutions related to the second communication apparatus.

Optionally, the transceiver 701, the processor 702, and the memory 703 are connected to each other through a bus 704. The bus 704 may be a peripheral component interconnect (peripheral component interconnect, PCI) bus, an extended industry standard architecture (extended industry standard architecture, EISA) bus, or the like. The bus may be divided into an address bus, a data bus, a control bus, and the like. For ease of representation, only one bold line is used for representation in FIG. 7, but this does not mean that there is only one bus or only one type of bus.

The transceiver 701 is configured to receive and send data. For example, when the communication apparatus 700 is the terminal device 120i shown in FIG. 1a, the transceiver 701 communicates with the RAN device 110a or the terminal device 120j shown in FIG. 1a, or may communicate with another device (for example, a vehicle-mounted device or a server) outside the architecture of the communication system shown in FIG. 1a. For another example, when the communication apparatus 700 is the terminal device 120f shown in FIG. 1a, the transceiver 701 communicates with the RAN device 110b, the terminal device 120g, or the terminal device 120h shown in FIG. 1a, or may communicate with another device (for example, a vehicle-mounted device or a server) outside the architecture of the communication system shown in FIG. 1a. For still another example, when the communication apparatus 700 is the terminal device 400 shown in FIG. 1b, the transceiver 701 communicates with the RAN device 600, the terminal device 501, or the terminal device 502 shown in FIG. 1b, or may communicate with another device (for example, a vehicle-mounted device or a server) outside the architecture of the communication system shown in FIG. 1b. In an example, the transceiver may be a transceiver apparatus integrated with data receiving and sending functions. In another example, the transceiver may alternatively include a transmitter and a receiver. The transmitter is configured to send data, and the receiver is configured to receive data.

Optionally, the transceiver 701 may include a transmitter and/or a receiver. The transmitter is configured to send a signal, a message, information, data, or the like. The receiver is configured to receive a signal, a message, information, data, or the like. For example, the transmitter sends a signal, a message, information, data, or the like under control of the processor 702. The receiver receives a signal, a message, information, data, or the like under control of the processor 702.

For a function of the processor 702, refer to descriptions of the corresponding function related to the first communication apparatus or the second communication apparatus in the foregoing embodiments. Details are not described herein again. The processor 702 may be a central processing unit (central processing unit, CPU), a network processor (network processor, NP), a combination of a CPU and an NP, or the like. The processor 702 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. When implementing the foregoing functions, the processor 702 may be implemented by hardware, or certainly may be implemented by hardware executing corresponding software.

The memory 703 is configured to store program instructions and the like. Specifically, the program instructions may include program code. The program code includes computer operation instructions. The memory 703 may include a random access memory (random access memory, RAM), or may further include a non-volatile memory (non-volatile memory), for example, at least one magnetic disk memory. The processor 702 executes the program instructions stored in the memory 703 to implement the foregoing function, to implement a method step that needs to be performed by the first communication apparatus or the second communication apparatus in the foregoing embodiments.

Based on a same concept, an embodiment of this application further provides a possible communication system. The communication system includes a first communication apparatus (for example, a first terminal device or a second terminal device) and a second communication apparatus (for example, a network device or a third terminal device). The first communication apparatus may be configured to implement the technical solutions related to the first communication apparatus in the foregoing embodiments, and the second communication apparatus may be configured to implement the technical solutions related to the second communication apparatus in the foregoing embodiments.

Based on a same concept, an embodiment of this application further provides a computer program product. The computer program product includes a computer program or instructions. When the computer program or the instructions are run on a computer, the computer is enabled to perform the method provided in the foregoing embodiments.

Based on a same concept, an embodiment of this application further provides a computer-readable storage medium. The computer-readable storage medium stores a computer program or instructions. When the computer program or the instructions are executed by a computer, the computer is enabled to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

Based on a same concept, an embodiment of this application further provides a computer program. The computer program includes program code. When a computer runs the computer program, the program code performs the method provided in the foregoing embodiments.

Based on a same concept, an embodiment of this application further provides a chip. The chip may include a processor, and may further include a memory (or the chip is coupled to the memory), and the chip executes program instructions in the memory, to perform the method in any possible design of the first aspect or the method in any possible design of the second aspect. "Coupling" means that two components are directly or indirectly combined with each other. For example, coupling may mean an electrical connection between the two components.

Based on a same concept, an embodiment of this application further provides a chip system. The chip system includes a processor, configured to support a computer apparatus in implementing a function of the first communication apparatus (for example, the first terminal device or the second terminal device) or the second communication apparatus (for example, the network device or the third terminal device) in the foregoing embodiments. In a possible design, the chip system further includes a memory, and the memory is configured to store a program and data that are necessary for the computer apparatus. The chip system may include a chip, or may include a chip and another discrete component.

All or some of the methods in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedures, or functions based on embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive (solid-state drive, SSD)), or the like.

The steps of the method described in embodiments of this application may be directly embedded into hardware, a software unit executed by a processor, or a combination thereof. The software unit may be stored in a RAM, a ROM, an EEPROM, a register, a hard disk drive, a removable magnetic disk, a CD-ROM, or a storage medium of any other form in the art. For example, the storage medium may connect to a processor, so that the processor can read information from the storage medium and write information to the storage medium. Optionally, the storage medium may alternatively be integrated into the processor. The processor and the storage medium may be disposed in an ASIC.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may also be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, applied to a first terminal device, wherein the method comprises:
obtaining a first configuration from a network device, wherein the first configuration comprises a first radio link control bearer configuration, the first radio link control bearer configuration has an association relationship with a first carrier, the first radio link control bearer configuration is one of a plurality of radio link control bearer configurations corresponding to a packet data convergence protocol entity configuration, the first radio link control bearer configuration is used to establish a first radio link control bearer entity, and the first carrier is a carrier corresponding to a terminal device that performs single-carrier communication; and
multicasting or broadcasting, on the first carrier, data corresponding to the first radio link control bearer entity.

2. The method according to claim 1, wherein radio link control bearer entities respectively established by using the plurality of radio link control bearer configurations are used to transmit same data.

3. The method according to claim 1, wherein
the packet data convergence protocol entity configuration comprises a packet data convergence protocol split configuration, and the packet data convergence protocol split configuration indicates to transmit a plurality of pieces of data in the first terminal device via a plurality of radio link control bearer entities; and the method further comprises:
transmitting the plurality of pieces of data via the first radio link control bearer entity.

4. The method according to claim 3, wherein the first terminal device does not support sidelink carrier aggregation and/or a destination address does not support the sidelink carrier aggregation, and the destination address indicates a receiving terminal device with which the first terminal device performs sidelink communication.

5. The method according to claim 3 or 4, wherein the method further comprises:
sending first information to the network device, wherein the first information indicates that the first terminal device does not apply the packet data convergence protocol split configuration.

6. The method according to any one of claims 1 to 3, wherein the method further comprises:
sending second information to the network device, wherein the second information indicates that the first terminal device supports sidelink carrier aggregation and/or indicates that a destination address supports the sidelink carrier aggregation, and the destination address indicates a receiving terminal device with which the first terminal device performs sidelink communication.

7. The method according to claim 6, wherein sending the second information to the network device comprises:
when the first terminal device is in a radio resource control connected state, sending a terminal device capability information message or a sidelink terminal device information message to the network device, wherein the terminal device capability information message or the sidelink terminal device information message comprises the second information, and the sidelink terminal device information message is used to request the first configuration.

8. The method according to claim 6 or 7, wherein the method further comprises:
obtaining third information from an upper layer of the first terminal device, wherein the third information indicates that the destination address supports the sidelink carrier aggregation.

9. The method according to any one of claims 1 to 8, wherein the association relationship is determined by the network device, or the association relationship is determined by the first terminal device.

10. The method according to any one of claims 1 to 9, wherein the association relationship is carried in the first configuration, or the association relationship is carried in the first radio link control bearer configuration.

11. The method according to any one of claims 1 to 9, wherein the first configuration comprises the plurality of radio link control bearer configurations; and
the method further comprises:
selecting one radio link control bearer configuration from the plurality of radio link control bearer configurations as the first radio link control bearer configuration; and
establishing the association relationship between the first radio link control bearer configuration and the first carrier.

12. The method according to any one of claims 1 to 11, wherein the first carrier is one of the following content: a carrier predefined in a communication protocol, a default carrier, a carrier supported by a terminal device in release Rel-16 and release Rel-17, and a specific carrier in a sidelink carrier list comprised in a system information block 12 message.

13. A communication method, applied to a second terminal device, wherein the method comprises:
determining that the second terminal device supports sidelink carrier aggregation; and
sending fourth information to a third terminal device on a second carrier, wherein the third terminal device is a receiving terminal device with which the second terminal device performs sidelink communication, the fourth information indicates that the second terminal device and the third terminal device perform sidelink transmission on a third carrier, the second carrier and/or the third carrier do/does not comprise a first carrier, the first carrier is a carrier corresponding to a terminal device that performs single-carrier communication, and the second carrier is different from the third carrier.

14. The method according to claim 13, wherein the method further comprises:
receiving, on the second carrier or the third carrier, a hybrid automatic repeat request feedback from the third terminal device, wherein the hybrid automatic repeat request feedback indicates a sidelink transmission receiving status of the third terminal device on the third carrier.

15. The method according to claim 13 or 14, wherein the method further comprises:
obtaining fifth information from an upper layer of the second terminal device, wherein the fifth information indicates that a destination address corresponding to the third terminal device supports the sidelink carrier aggregation.

16. The method according to any one of claims 13 to 15, wherein the sidelink aggregation comprises sidelink cross-carrier scheduling and/or sidelink cross-carrier feedback.

17. The method according to any one of claims 13 to 16, wherein the first carrier is one of the following content: a carrier predefined in a communication protocol, a default carrier, a carrier supported by a terminal device in release Rel-16 and release Rel-17, and a specific carrier in a sidelink carrier list comprised in a system information block 12 message.

18. A communication apparatus, comprising a module or a unit configured to perform the method according to any one of claims 1 to 12 or a module or a unit configured to perform the method according to any one of claims 13 to 17.

19. A communication apparatus, comprising:
a transceiver, configured to receive and send data;
a memory, configured to store computer program instructions and data; and
a processor, configured to execute and invoke the computer program instructions and the data in the memory, to enable the communication apparatus to perform the method according to any one of claims 1 to 12 or the method according to any one of claims 13 to 17.

20. A communication system, comprising a first terminal device configured to perform the method according to any one of claims 1 to 12 or a second terminal device configured to perform the method according to any one of claims 13 to 17.

21. A computer-readable storage medium, wherein the computer-readable storage medium stores a computer program or instructions, and when the computer program or the instructions are executed by a computer, the computer is enabled to perform the method according to any one of claims 1 to 12 or the method according to any one of claims 13 to 17.

22. A computer program product, wherein the computer program product comprises a computer program or instructions, and when the computer program or the instructions are run on a computer, the computer is enabled to perform the method according to any one of claims 1 to 12 or the method according to any one of claims 13 to 17.

23. A computer program, wherein the computer program comprises program code, and when a computer runs the computer program, the program code performs the method according to any one of claims 1 to 12 or the method according to any one of claims 13 to 17.

24. A chip, wherein the chip comprises a processor, and the chip is configured to execute program instructions in a memory, to perform the method according to any one of claims 1 to 12 or the method according to any one of claims 13 to 17.
